# EUROPEAN PATENT APPLICATION

(11) **EP 2 592 465 A2**
(43) Date of publication of application: **15.05.2013**
(21) Application number: 12191420.4
(22) Date of filing: 06.11.2012
(51) Int. Cl.: G02F 1/13, G02F 1/1333, G02B 6/00

(54) **Display**

(30) Priority: 08.11.2011 JP 2011244799; 08.11.2011 JP 2011244804; 08.11.2011 JP 2011244806; 05.09.2012 JP 2012195564
(71) Applicant: Funai Electric Co., Ltd., Nakagaito Daito-shi Osaka 574-0013 (JP)
(72) Inventor: Suzuki, Yuto, Daito-shi, Osaka 574-0013 (JP); Nakano, Kodai, Daito-shi, Osaka 574-0013 (JP)
(74) Representative: Grünecker, Kinkeldey, Stockmair & Schwanhäusser

(57) **Abstract**

This display (100) includes a display portion (2) including a light source (245) and a reflective sheet (244) and a frame-shaped support portion (3) supporting the reflective sheet of the display portion from a rear surface side opposite to a display screen side. The frame-shaped support portion includes a first frame component member (31) and a second frame component member (32), and the first frame component member and the second frame component member are fixed to each other by fastening with a first fastening member (3a).

## Description

### BACKGROUND OF THE INVENTION

### Field of the Invention

The present invention relates to a display, and more particularly, it relates to a display including a display portion.

### Description of the Background Art

A display including a display portion is known in general, as disclosed in Japanese Patent Laying-Open No. 2011-040388, for example.

The aforementioned Japanese Patent Laying-Open No. 2011-040388 discloses a display that includes a display panel, a light source portion emitting light to the display panel, a reflective sheet reflecting the light from the light source portion toward the display panel, and a box-shaped lower storage container arranged on the rear surface side of the display panel, supporting the reflective sheet from the rear surface side thereof. This box-shaped lower storage container is constituted by three metal members.

In the display according to the aforementioned Japanese Patent Laying-Open No. 2011-040388, however, the box-shaped lower storage container constituted by the three metal members covers the entire rear surface of the reflective sheet, so that the size and weight of the lower storage container is disadvantageously increased. Thus, it is difficult to reduce the weight of the lower storage container (support portion) supporting the reflective sheet from the rear surface side thereof.

### SUMMARY OF THE INVENTION

The present invention has been proposed in order to solve the aforementioned problem, and an object of the present invention is to provide a display capable of reducing the weight of a support portion supporting a reflective sheet from the rear surface side thereof.

A display according to an aspect of the present invention includes a display portion including a light source and a reflective sheet reflecting light emitted from the light source toward a front surface side which is a display screen side, and a frame-shaped support portion supporting the reflective sheet of the display portion from a rear surface side opposite to the display screen side, while the frame-shaped support portion includes a first frame component member and a second frame component member, and the first frame component member and the second frame component member are fixed to each other by fastening with a first fastening member.

In the display according to the aspect of the present invention, as hereinabove described, the support portion supporting the reflective sheet from the rear surface side is formed in a frame shape, whereby the surface area of the support portion can be reduced, dissimilarly to a case where the support portion covers the entire rear surface side of the reflective sheet, and hence the weight of the support portion supporting the reflective sheet from the rear surface side can be reduced. Thus, the weight of the display can be reduced, as compared with the case where the support portion covers the entire rear surface side of the reflective sheet. Furthermore, the frame-shaped support portion is constituted by the first frame component member and the second frame component member, whereby material loss resulting from cutout can be reduced, as compared with a case where the frame-shaped support portion is integrally formed by cutting out an internal portion of a single plate material.

In the aforementioned display according to the aspect, the frame-shaped support portion preferably further includes a third frame component member and a fourth frame component member, and the first frame component member is preferably made of a material more excellent in thermal conductivity than the second frame component member, the third frame component member, and the fourth frame component member. According to this structure, heat generated from the light source or the like can be effectively released by the first frame component member made of the material excellent in thermal conductivity.

In this case, the aforementioned display according to the aspect preferably further includes a metal rear frame arranged on the rear surface side of the frame-shaped support portion, covering the rear surface side of the display portion, and the first frame component member preferably has a first drawn portion brought into contact with the metal rear frame. According to this structure, the heat generated from the light source or the like can be more effectively released from the first frame component member to an external portion through the metal rear frame.

The aforementioned display including the metal rear frame preferably further includes a cover member arranged on the rear surface side of the metal rear frame, covering the rear surface of the rear frame to partially expose the rear surface of the rear frame, and the first frame component member is preferably brought into contact with the front surface of a portion exposed from the cover member of the rear surface of the rear frame. According to this structure, the heat generated from the light source or the like can be efficiently released from the first frame component member to the external portion through the portion of the rear frame exposed from the cover member.

In the aforementioned structure in which the frame-shaped support portion includes the third frame component member and the fourth frame component member, at least one of two frame component members fixed to each other in at least one of four fixed portions between the first frame component member, the second frame component member, the third frame component member, and the fourth frame component member which are fixed to each other is preferably provided with a second drawn portion, and the frame component member provided with the second drawn portion and the other frame component member fixed to the frame component member provided with the second drawn portion preferably come into contact with each other and are preferably fixed to each other with a fastening member in the second drawn portion. According to this structure, the contact area between the two frame component members fixed to each other in at least one of the four fixed portions between the first frame component member, the second frame component member, the third frame component member, and the fourth frame component member which are fixed to each other can be reduced, and hence vibration resulting from sound output from a speaker of the display can be suppressed in a case where the display includes the speaker.

In the aforementioned display according to the aspect, either the first frame component member or the second frame component member is preferably provided with a first hook portion while either the second frame component member or the first frame component member is preferably provided with a first hook engaging portion, and the first frame component member and the second frame component member are preferably fixed to each other by fastening with the first fastening member in a state where the first hook portion engages with the first hook engaging portion. According to this structure, uplift and inclination of the first frame component member with respect to the second frame component member in a position other than a fastening position resulting from the fastening force of the first fastening member is suppressed by the engagement between the first hook portion and the first hook engaging portion, and hence the reflective sheet can be inhibited from being excessively compressed by the frame-shaped support portion supporting the reflective sheet. Consequently, a light guide plate arranged on the front surface side of the reflective sheet can be inhibited from being locally compressed, and hence occurrence of luminance unevenness can be suppressed.

In the aforementioned structure provided with the first hook portion and the first hook engaging portion, the first frame component member and the second frame component member are preferably fixed to each other by fastening with the first fastening member in a first fastening portion spaced in a direction orthogonal to the longitudinal direction of the first frame component member from the engagement portion between the first hook portion and the first hook engaging portion. According to this structure, engagement force resulting from the engagement between the first hook portion and the first hook engaging portion which are spaced in the direction orthogonal to the longitudinal direction of the first frame component member from the first fastening portion can offset force in a direction of uplift and inclination of the first frame component member with respect to the second frame component member in a position other than the first fastening portion resulting from the fastening force of the first fastening member, and hence uplift and inclination of the first frame component member with respect to the second frame component member can be easily suppressed.

In this case, the first fastening member preferably includes a screw, the first fastening portion preferably includes a screw fastening portion, and the first hook portion and the first hook engaging portion are preferably formed to engage with each other in a direction in which the first frame component member and the second frame component member are screwed with the screw in the screw fastening portion. According to this structure, the first hook portion and the first hook engaging portion can engage with each other in a direction opposite to a direction of uplift of the first frame component member with respect to the second frame component member resulting from screwing with the screw, and hence uplift and inclination of the first frame component member with respect to the second frame component member can be more easily suppressed.

In the aforementioned structure in which the first frame component member and the second frame component member fasten with the first fastening member in the first fastening portion, the first hook portion is preferably formed with a prescribed width to extend in the longitudinal direction of the first frame component member, and the first fastening portion is preferably arranged in a position spaced in the short-side direction of the first frame component member from the first hook portion and between one end and the other end of the prescribed width of the first hook portion. According to this structure, a position spaced in the short-side direction of the first frame component member from the first fastening portion where the first frame component member is likely to be uplifted with respect to the second frame component member can be directly held by engagement of the first hook portion, and hence twisting and uplift of the first frame component member with respect to the second frame component member can be suppressed. Thus, uplift and inclination of the first frame component member with respect to the second frame component member can be more easily suppressed. Furthermore, the first hook portion is formed to extend in the longitudinal direction of the first frame component member, whereby the width of the engagement portion of the first hook portion in the longitudinal direction of the first frame component member can be increased, and hence force of uplift of the first frame component member with respect to the second frame component member can be stably offset.

In the aforementioned structure provided with the first hook portion and the first hook engaging portion, the frame-shaped support portion preferably further includes a third frame component member and a fourth frame component member, either the second frame component member or the third frame component member is preferably provided with a second hook portion while either the third frame component member or the second frame component member is preferably provided with a second hook engaging portion, either the third frame component member or the fourth frame component member is preferably provided with a third hook portion while either the fourth frame component member or the third frame component member is preferably provided with a third hook engaging portion, either the fourth frame component member or the first frame component member is preferably provided with a fourth hook portion while either the first frame component member or the fourth frame component member is preferably provided with a fourth hook engaging portion, the third frame component member and the fourth frame component member are preferably fixed to each other by fastening with a second fastening member in a state where the third hook portion engages with the third hook engaging portion, the fourth frame component member and the first frame component member are preferably fixed to each other by fastening with a third fastening member in a state where the fourth hook portion engages with the fourth hook engaging portion, and the second frame component member and the third frame component member are preferably fixed to each other by fastening with a fourth fastening member in a state where the second hook portion engages with the second hook engaging portion. According to this structure, uplift and inclination of the first frame component member with respect to the fourth frame component member in a position other than a fastening position resulting from the fastening force of the third fastening member is suppressed by the engagement between the fourth hook portion and the fourth hook engaging portion, uplift and inclination of the third frame component member with respect to the second frame component member in a position other than a fastening position resulting from the fastening force of the fourth fastening member is suppressed by the engagement between the second hook portion and the second hook engaging portion, and uplift and inclination of the third frame component member with respect to the fourth frame component member in a position other than a fastening position resulting from the fastening force of the second fastening member is suppressed by the engagement between the third hook portion and the third hook engaging portion, whereby the reflective sheet can be inhibited from being excessively compressed by the frame-shaped support portion including the first frame component member, the second frame component member, the third frame component member, and the fourth frame component member.

In the aforementioned display according to the aspect, the first frame component member preferably has a plurality of first recess portions, the second frame component member preferably has a plurality of first projecting portions provided to correspond to the plurality of first recess portions, respectively, and the first frame component member and the second frame component member are preferably fixed to each other by fastening with the first fastening member in a fastening portion in a state where the plurality of first projecting portions are fitted to the plurality of first recess portions. According to this structure, the clearance (fitting clearance) between a first recess portion and a first projecting portion is reduced or disappears locally due to positional deviation or the like resulting from the tolerances (variations in dimension) of the sizes and pitches of the first recess portion and the first projecting portion in a fitted portion of at least one set of the plurality of first recess portions and the plurality of first projecting portions which are fitted to each other, and hence deviation and movement of the first frame component member with respect to the second frame component member can be suppressed. Thus, the frame-shaped support portion can be inhibited from becoming parallelogram-shaped or the like due to rotation (inclination) of the first frame component member about the first fastening member with respect to the second frame component member, and hence the frame-shaped support portion can stably support the display portion.

In this case, the plurality of first projecting portions are preferably fitted to the plurality of first recess portions in a state where the center of a first recess portion deviates from the center of a first projecting portion as viewed from a fitting direction in at least one set of the plurality of first recess portions and the plurality of first projecting portions which are fitted to each other. According to this structure, at least one of clearances between the first recess portions and the first projecting portions is reduced, or at least one of the clearances therebetween is likely to disappear locally, and hence rotation (inclination) of the first frame component member with respect to the second frame component member can be easily suppressed.

In the aforementioned structure in which the first frame component member has the plurality of first recess portions, the first frame component member preferably further has a first positioning portion to position the first frame component member with respect to the second frame component member, the second frame component member preferably further has a second positioning portion to position the second frame component member with respect to the first frame component member, the plurality of first recess portions are preferably arranged at prescribed intervals around the first positioning portion of the first frame component member, and the plurality of first projecting portions are preferably arranged at prescribed intervals around the second positioning portion of the second frame component member. According to this structure, the plurality of first projecting portions can be easily fitted to the plurality of first recess portions by positioning the first frame component member and the second frame component member by the first positioning portion and the second positioning portion.

In the aforementioned structure in which the first frame component member has the plurality of first recess portions, the frame-shaped support portion preferably further includes a third frame component member and a fourth frame component member, the third frame component member preferably has a plurality of second recess portions, the fourth frame component member preferably has a plurality of second projecting portions provided to correspond to the plurality of second recess portions, respectively, and the third frame component member and the fourth frame component member are preferably fixed to each other by fastening with a second fastening member in a state where the plurality of second projecting portions are fitted to the plurality of second recess portions with clearances. According to this structure, the frame-shaped support portion including the first frame component member, the second frame component member, the third frame component member, and the fourth frame component member can be inhibited from becoming parallelogram-shaped or the like due to rotation (inclination) of the first frame component member with respect to the second frame component member and rotation (inclination) of the third frame component member with respect to the fourth frame component member, and hence the frame-shaped support portion can more stably support the display portion.

In this case, the first frame component member preferably has a plurality of oblong hole-shaped third recess portions each having a larger length in a prescribed direction relative to the plurality of first recess portions, the fourth frame component member preferably has a plurality of third projecting portions provided to correspond to the plurality of third recess portions, respectively, the third frame component member preferably has a plurality of oblong hole-shaped fourth recess portions each having a larger length in a prescribed direction relative to the plurality of second recess portions, the second frame component member preferably has a plurality of fourth projecting portions provided to correspond to the plurality of fourth recess portions, respectively, the first frame component member and the fourth frame component member are preferably fixed to each other by fastening with a third fastening member in a state where the plurality of third projecting portions are fitted to the plurality of oblong hole-shaped third recess portions with clearances, and the third frame component member and the second frame component member are preferably fixed to each other by fastening with a fourth fastening member in a state where the plurality of fourth projecting portions are fitted to the plurality of oblong hole-shaped fourth recess portions with clearances. According to this structure, the tolerances (variations in dimension) of the sizes and pitches of the third recess portions and the third projecting portions can be tolerated by the oblong hole-shaped third recess portions, and hence the third projecting portions can be reliably fitted to the third recess portions. Furthermore, the tolerances (variations in dimension) of the sizes and pitches of the fourth recess portions and the fourth projecting portions can be tolerated by the oblong hole-shaped fourth recess portions, and hence the fourth projecting portions can be reliably fitted to the fourth recess portions. Thus, the frame-shaped support portion including the first frame component member, the second frame component member, the third frame component member, and the fourth frame component member can be easily assembled.

According to the present invention, as hereinabove described, the weight of the support portion supporting the reflective sheet from the rear surface side thereof can be reduced.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an overall perspective view of a television set according to an embodiment of the present invention, as viewed from the front side;
Fig. 2 is an overall perspective view of the television set according to the embodiment of the present invention, as viewed from the rear side;
Fig. 3 is an exploded perspective view showing the structure of a display portion of the television set according to the embodiment of the present invention;
Fig. 4 is a front elevational view showing the structure of a support frame according to the embodiment of the present invention;
Fig. 5 is a front elevational view showing a heat sink member of the support frame according to the embodiment of the present invention;
Fig. 6 is a front elevational view showing a lower frame component member of the support frame according to the embodiment of the present invention;
Fig. 7 is a front elevational view showing a transverse frame component member of the support frame according to the embodiment of the present invention;
Fig. 8 is a front elevational view showing an upper frame component member of the support frame according to the embodiment of the present invention;
Fig. 9 is an enlarged perspective view of an engagement portion of a hook of the support frame according to the embodiment of the present invention, as viewed from the rear side;
Fig. 10 is an enlarged front elevational view showing a fitted portion of the support frame according to the embodiment of the present invention;
Fig. 11 is a sectional view taken along the line 200-200 in Fig. 10;
Fig. 12 is a sectional view taken along the line 300-300 in Fig. 10;
Fig. 13 is a sectional view taken along the line 400-400 in Fig. 4;
Fig. 14 is a sectional view taken along the line 500-500 in Fig. 4;
Fig. 15 is a sectional view taken along the line 600-600 in Fig. 4;
Fig. 16 is a front elevational view for illustrating fitting of a dowel hole and a dowel;
Fig. 17 is a front elevational view for illustrating fitting in a case where the dowel is increased due to a tolerance;
Fig. 18 is a front elevational view for illustrating fitting in a case where the position of the dowel deviates due to the tolerance;
Fig. 19 is a front elevational view showing the structure of a support frame according to a first modification of the embodiment of the present invention; and
Fig. 20 is a front elevational view showing the structure of a support frame according to a second modification of the embodiment of the present invention.

### DESCRIPTION OF THE PREFERRED EMBODIMENTS

An embodiment of the present invention is now described with reference to the drawings.

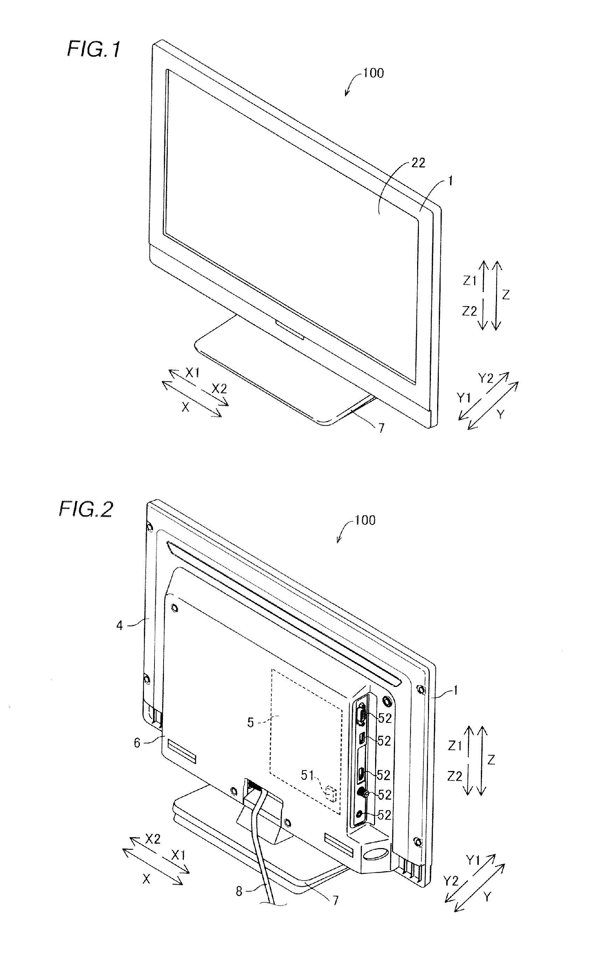

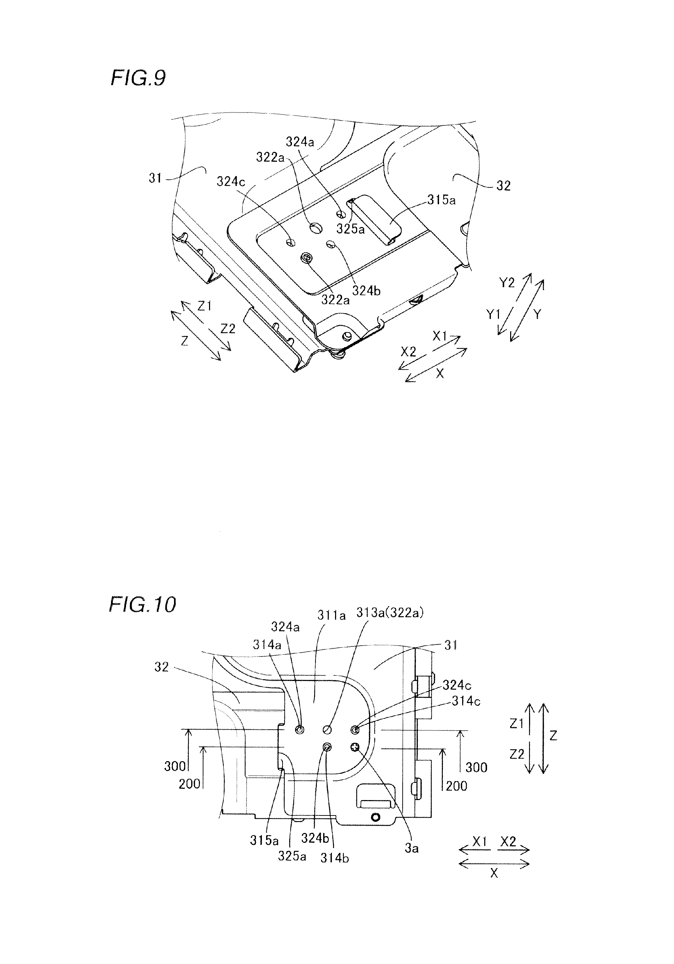

The structure of a television set 100 according to the embodiment of the present invention is hereinafter described with reference to Figs. 1 to 18. The television set 100 is an example of the "display" in the present invention.

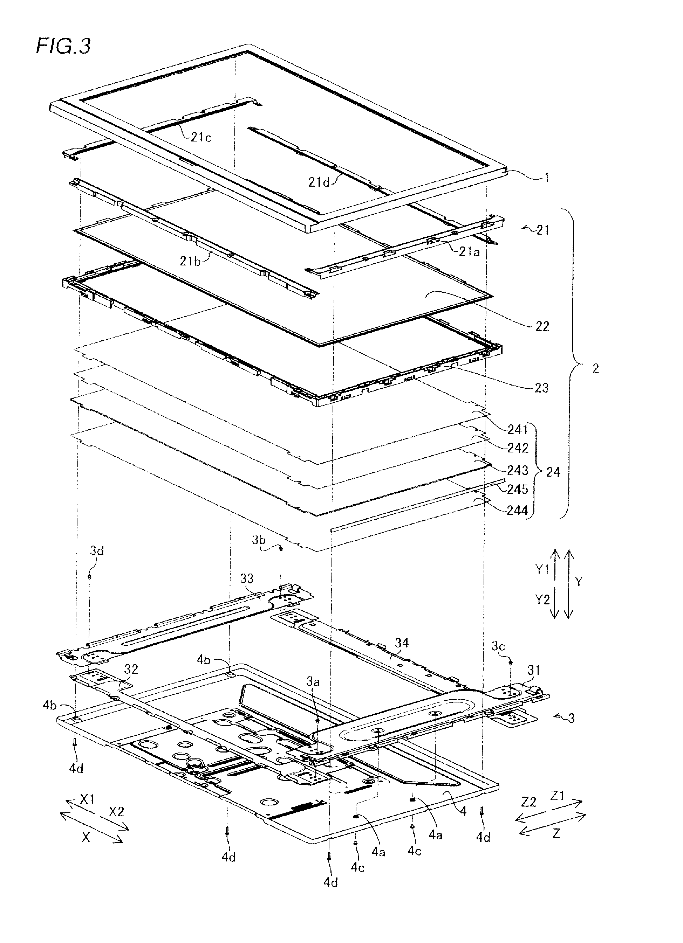

The television set 100 according to the embodiment of the present invention includes a front cabinet 1 made of resin, a display portion 2, a support frame 3 made of metal, and a rear frame 4 made of metal, as shown in Fig. 3. Furthermore, the television set 100 includes a circuit board 5, a cover member 6, a stand 7, and a power cord 8, as shown in Fig. 2. The support frame 3 is an example of the "support portion" in the present invention.

The front cabinet 1 has a rectangular frame shape in front elevational view, as shown in Fig. 1. The front cabinet 1 is made of resin such as polystyrene. Screw holes (not shown) to mount the rear frame 4 are provided in the rear surface (surface on the arrow Y2 direction side) of the front cabinet 1.

The display portion 2 includes a bezel 21, a display panel 22, a resin frame 23, and a backlight portion 24, as shown in Fig. 3. The bezel 21 is arranged on the rear side (arrow Y2 direction side) of the front cabinet 1 and supports the display panel 22 from the front side (arrow Y1 direction side). The bezel 21 includes four bezel component portions 21a to 21d and is formed in a rectangular frame shape in front elevational view by combining these component portions.

The display panel 22 is arranged on the rear side (arrow Y2 direction side) of the bezel 21. The display panel 22 is configured to display a television broadcasting picture on a screen thereof on the front side (arrow Y1 direction side). The resin frame 23 supports the display panel 22 from the rear side (arrow Y2 direction side). The resin frame 23 has a rectangular frame shape in front elevational view.

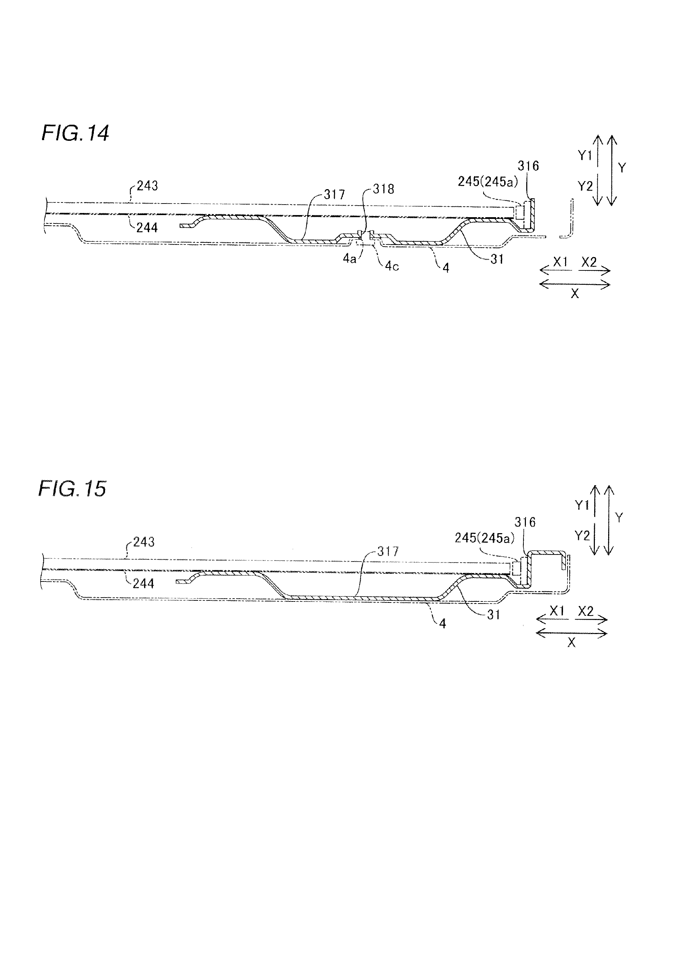

The backlight portion 24 is configured to emit light to the surface of the display panel 22 on the rear side (arrow Y2 direction side). Thus, the display panel 22 can display a bright and clear image. The backlight portion 24 includes a prism sheet 241, a diffusion sheet 242, a light guide plate 243, and a reflective sheet 244 successively arranged from the front side (arrow Y1 direction side), as shown in Fig. 3. The backlight portion 24 includes an LED (light-emitting diode) light source unit 245 arranged on the side surface of the light guide plate 243 on an arrow X2 direction side. The backlight portion 24 is so configured that light from the LED light source unit 245 comes into the light guide plate 243 from the arrow X2 direction side and thereafter is repetitively multiply-reflected by the reflective sheet 244 to be emitted from the front side (arrow Y1 direction side) of the light guide plate 243 to the display panel 22 through the diffusion sheet 242 and the prism sheet 241. The LED light source unit 245 has a plurality of LED elements 245a (see Figs. 14 and 15) arranged vertically (in a direction Z). The LED light source unit 245 is mounted on a heat sink member 31, described later, of the support frame 3 with an unshown thermal release tape. The LED light source unit 245 is an example of the "light source" in the present invention.

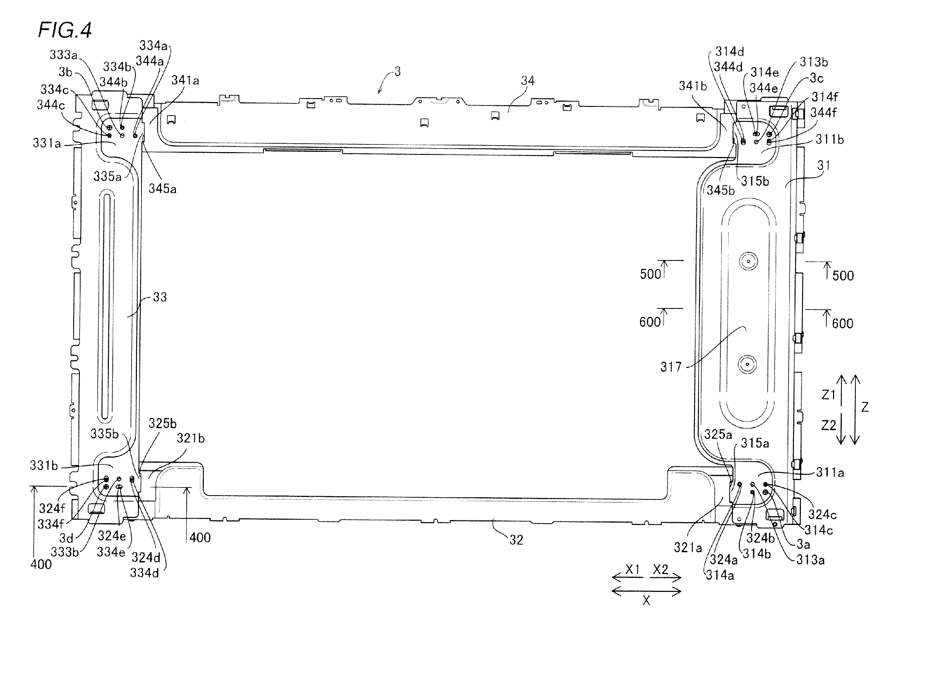

According to this embodiment, the support frame 3 supports the display portion 2 (reflective sheet 244) from the rear surface side (arrow Y2 direction side), as shown in Fig. 3. The support frame 3 includes the heat sink member 31, a lower frame component member 32, a transverse frame component member 33, and an upper frame component member 34. The support frame 3 has a rectangular frame shape in front elevational view, as shown in Fig. 4. The support frame 3 is formed in a frame shape by fixing the heat sink member 31, the lower frame component member 32, the transverse frame component member 33, and the upper frame component member 34 arranged on the four sides of the rectangular shape, respectively, to each other. The heat sink member 31 and the lower frame component member 32 are examples of the "first frame component member" and the "second frame component member" in the present invention, respectively, and the transverse frame component member 33 and the upper frame component member 34 are examples of the "third frame component member" and the "fourth frame component member" in the present invention, respectively.

The support frame 3 and the resin frame 23 are fitted to each other in the vicinity of the outer peripheries thereof in a state of holding the backlight portion 24 therebetween to be fixed. The support frame 3 is fixed to the bezel 21 with unshown screws. The support frame 3 is held between the display portion 2 and the rear frame 4 as well as between the front cabinet 1 and the rear frame 4, and fixed to the front cabinet 1.

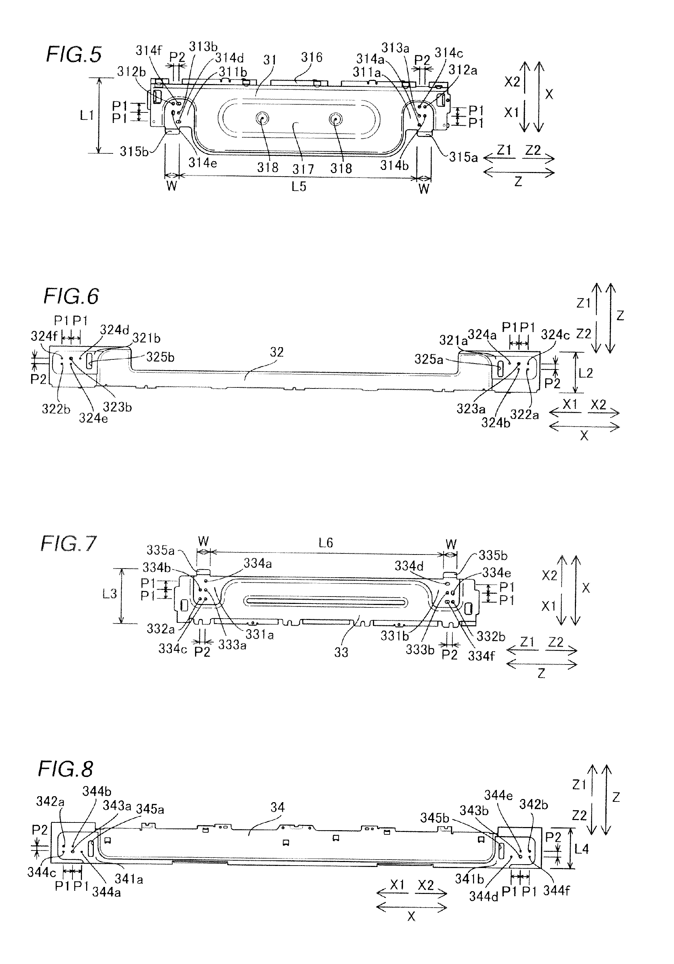

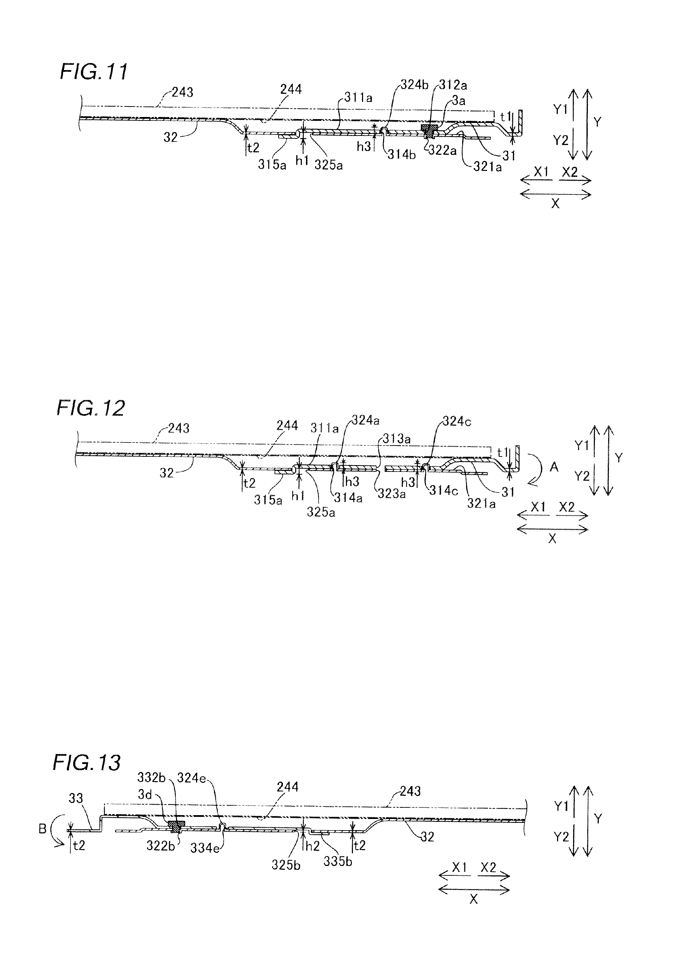

The heat sink member 31 is provided on the side (arrow X2 direction side) where the LED light source unit 245 of the frame-shaped support frame 3 is arranged, as shown in Fig. 4. The heat sink member 31 is made of aluminum or aluminum alloy more excellent in heat release performance that SECC (electrolytic zinc-plated steel) of which the lower frame component member 32, the transverse frame component member 33, and the upper frame component member 34 are made. The heat sink member 31 is made of a plate material having a thickness t1 (1 mm, for example), as shown in Fig. 11. In other words, the heat sink member 31 is formed to have the thickness t1 larger than the thickness t2 of the lower frame component member 32, the thickness t2 of the transverse frame component member 33, and the thickness t2 of the upper frame component member 34. The heat sink member 31 is configured to support the display portion 2 (reflective sheet 244) and release heat generated from the LED light source unit 245. Thus, a part of the frame-shaped support frame 3 supporting the reflective sheet 244 can be employed as a heat sink releasing the heat generated from the LED light source unit 245, and hence no dedicated heat sink member for releasing the heat generated from the LED light source unit 245 may be provided separately. The heat sink member 31 is formed to extend vertically (in the direction Z), as shown in Fig. 5. The heat sink member 31 is formed to have a length L1, which is larger than the length L2 of the lower frame component member 32 in the short-side direction (direction Z), the length L3 of the transverse frame component member 33 in the short-side direction (direction X), and the length L4 of the upper frame component member 34 in the short-side direction (direction Z), in the short-side direction (direction X). The heat sink member 31 has drawn portions 311a and 311b, screw receiving holes 312a and 312b, jig holes 313a and 313b, dowel holes 314a to 314f, hooks 315a and 315b, a light source mounting portion 316, a drawn portion 317, and screw holes 318. The drawn portions 311a and 311b are examples of the "second drawn portion" in the present invention. The screw receiving hole 312a is an example of the "first fastening portion" or the "screw fastening portion" in the present invention. The jig hole 313a is an example of the "first positioning portion" in the present invention. The dowel holes 314a to 314c are examples of the "first recess portion" in the present invention, and the dowel holes 314d to 314f are examples of the "third recess portion" in the present invention. The hooks 315a and 315b are examples of the "first hook portion" and the "fourth hook portion" in the present invention, respectively. The drawn portion 317 is an example of the "first drawn portion" in the present invention.

The drawn portion 311a (311b) is arranged on the lower side (arrow Z2 direction side) (upper side (arrow Z1 direction side)) of the heat sink member 31, as shown in Fug. 5. The drawn portion 311a (311b) is formed to protrude toward the lower frame component member 32 (upper frame component member 34) (arrow Y2 direction side), as shown in Figs. 11 and 12.

The screw receiving hole 312a (312b) is arranged in a lower right region (region in an arrow X2 direction and an arrow Z2 direction) (upper right region (region in the arrow X2 direction and an arrow Z1 direction)) of the drawn portion 311a (311b), as shown in Fig. 5. The screw receiving hole 312a (312b) is arranged in a position spaced in the arrow X2 direction from the hook 315a (315b) and within the width W of the hook 315a (315b) in the direction Z. The jig hole 313a (313b) is arranged in a substantially central portion of the drawn portion 311a (311b). Specifically, the jig hole 313a (313b) is arranged between the hook 315a (315b) and the screw receiving hole 312a (312b) in a direction (direction X) orthogonal to the longitudinal direction of the heat sink member 31. The jig hole 313a (313b) is provided to receive an unshown jig and position the heat sink member 31 when the support frame 3 is assembled. The jig hole 313a (313b) is formed by a circular through-hole having a diameter D1 (4.2 mm ± 0.05 mm, for example).

The dowel holes 314a to 314c (314d to 314f) are arranged at prescribed intervals around the jig hole 313a (313b) in the drawn portion 311a (311b). The dowel holes 314a to 314c (314d to 314f) are so arranged that the arrangement positions thereof form a triangle, as viewed from the anteroposterior direction (direction Y). Specifically, the dowel hole 314a is arranged at a center-to-center spacing distance (pitch) P1 (13 mm ± 0.05 mm, for example) on the left side (arrow X1 direction side) of the jig hole 313a. The dowel hole 314b is arranged at a center-to-center spacing distance (pitch) P2 (8 mm ± 0.05 mm, for example) on the lower side (arrow Z2 direction side) of the jig hole 313a. The dowel hole 314c is arranged at the same center-to-center spacing distance

(pitch) P1 as the dowel hole 314a on the right side (arrow X2 direction side) of the jig hole 313a. The dowel holes 314a to 314c each are formed by a circular through-hole having the same diameter D1 as the jig hole 313a. The diameter D1, the center-to-center spacing distance P1, and the center-to-center spacing distance P2 each include a tolerance (variation in dimension) (± 0.05 mm, for example).

The dowel hole 314d is arranged at a center-to-center spacing distance P1 (13 mm ± 0.05 mm, for example) on the left side (arrow X1 direction side) of the jig hole 313b. The dowel hole 314e is arranged at a center-to-center spacing distance P2 (8 mm ± 0.05 mm, for example) on the upper side (arrow Z1 direction side) of the jig hole 313b. The dowel hole 314f is arranged at the same center-to-center spacing distance P1 as the dowel hole 314d on the right side (arrow X2 direction side) of the jig hole 313b. The dowel holes 314d and 314f each have a width D2 (4.2 mm ± 0.05 mm, for example), which is equal to the diameter D1 of each of the dowel holes 314a to 314c, in the horizontal direction (direction X) and are formed by an oblong through-hole having a length D3 (6 mm ± 0.05 mm, for example), which is larger than the diameter D1 of each of the dowel holes 314a to 314c, in the vertical direction (direction Z). The dowel hole 314e has a width D2 (4.2 mm ± 0.05 mm, for example), which is equal to the diameter D1 of each of the dowel holes 314a to 314c, in the vertical direction (direction Z) and is formed by an oblong through-hole having a length D3 (6 mm ± 0.05 mm, for example), which is larger than the diameter D1 of each of the dowel holes 314a to 314c, in the horizontal direction (direction X). The center-to-center spacing distance P1, the center-to-center spacing distance P2, the width D2, and the length D3 each include a tolerance (variation in dimension) (± 0.05 mm, for example).

The hook 315a is arranged on the lower side (arrow Z2 direction side) of the heat sink member 31, as shown in Fig. 5. The hook 315a has a width W in the vertical direction (direction Z). The hook 315a has a level difference h1 (see Figs. 11 and 12) in the anteroposterior direction (direction Y) and is formed to extend toward the transverse frame component member 33 (arrow X1 direction side). The hook 315b is arranged on the upper side (arrow Z1 direction side) of the heat sink member 31 at an interval L5 from the hook 315a. The hook 315b has a width W, which is equal to that of the hook 315a, in the vertical direction (direction 2). The hook 315b has a level difference h1, which is equal to that of the hook 315a, in the anteroposterior direction (direction Y) and is formed to extend toward the transverse frame component member 33 (arrow X1 direction side).

The light source mounting portion 316 is arranged on the arrow X2 direction side of the heat sink member 31. The light source mounting portion 316 is so configured that the LED light source unit 245 is mounted.

The drawn portion 317 is arranged on a substantially central portion of the heat sink member 31, as shown in Fig. 5. The drawn portion 317 is formed in an oblong shape extending in the longitudinal direction (direction Z) of the heat sink member 31. The drawn portion 317 is formed to protrude toward the rear frame 4 (arrow Y2 direction side), as shown in Figs. 14 and 15. In the drawn portion 317, the two screw holes 318 are arranged at an interval in the vertical direction (direction Z), as shown in Fig. 5.

The lower frame component member 32 is provided on the lower side (arrow Z2 direction side) of the frame-shaped support frame 3, as shown in Fig. 4. The lower frame component member 32 is made of SECC (electrolytic zinc-plated steel). The lower frame component member 32 is made of sheet metal having the thickness t2 (0.6 mm, for example) smaller than the thickness t1 of the heat sink member 31, as shown in Fig. 11. The lower frame component member 32 is configured to support the display portion 2 (reflective sheet 244). The lower frame component member 32 is formed to extend horizontally (in the direction X), as shown in Fig. 6. The lower frame component member 32 has the length L2, which is smaller than the length L1, in the short-side direction (direction Z). The lower frame component member 32 has drawn portions 321a and 321b, screw holes 322a and 322b, jig holes 323a and 323b, dowels 324a to 324f, and hook engaging portions 325a and 325b. The drawn portions 321a and 321b are examples of the "second drawn portion" in the present invention. The screw hole 322a is an example of the "first fastening portion" or the "screw fastening portion" in the present invention, and the jig hole 323a is an example of the "second positioning portion" in the present invention. The dowels 324a to 324c are examples of the "first projecting portion" in the present invention, and the dowels 324d to 324f are examples of the "fourth projecting portion" in the present invention. The hook engaging portions 325a and 325b are examples of the "first hook engaging portion" and the °`second hook engaging portion" in the present invention, respectively.

The drawn portion 321a (321b) is arranged on the right side (arrow X2 direction side) (left side (arrow X1 direction side)) of the lower frame component member 32, as shown in Fig. 6. The drawn portion 321a (321b) is formed to protrude toward the heat sink member 31 (transverse frame component member 33) (arrow Y1 direction side).

The screw hole 322a (322b) is arranged in a lower right region (region in the arrow X2 direction and the arrow Z2 direction) (lower left region (region in an arrow X1 direction and the arrow Z2 direction)) of the drawn portion 321a (321b). The screw hole 322a (322b) is arranged in a position spaced in the arrow X2 direction (arrow X1 direction) from the hook engaging portions 325a (325b).

The jig hole 323a (323b) is arranged in the drawn portion 321a (321b). Specifically, the jig hole 323a (323b) is arranged between the hook engaging portion 325a (325b) and the screw hole 322a (322b) in the longitudinal direction (direction X) of the lower frame component member 32. The jig hole 323a (323b) is provided to receive the unshown jig and position the lower frame component member 32 when the support frame 3 is assembled. The jig hole 323a (323b) is formed by a circular through-hole having a diameter D1 (4.2 mm ± 0.05 mm, for example) equal to those of the jig holes 313a and 313b.

The dowels 324a to 324c (324d to 324f) are arranged at prescribed intervals around the jig hole 323a (323b) in the drawn portion 321a (321b). The dowels 324a to 324c (324d to 324f) are so arranged that the arrangement positions thereof form a triangle, as viewed from the anteroposterior direction (direction Y). Specifically, the dowel 324a (324d) is arranged at a center-to-center spacing distance (pitch) P1 (13 mm ± 0.05 mm, for example) on the left side (arrow X1 direction side) (right side (arrow X2 direction side)) of the jig hole 323a (323b). The dowel 324b (324e) is arranged at a center-to-center spacing distance (pitch) P2 (8 mm ± 0.05 mm, for example) on the lower side (arrow Z2 direction side) of the jig hole 323a. The dowel 324c (324f) is arranged at the same center-to-center spacing distance (pitch) P1 as the dowel 324a (324d) on the right side (arrow X2 direction side) (left side (arrow X1 direction side)) of the jig hole 323a (323b). The dowels 324a to 324f each have a diameter D4 (4 mm ± 0.05 mm, for example) and are formed by a cylindrical protrusion protruding toward the heat sink member 31 (transverse frame component member 33) (arrow Y1 direction side) with a height h3 (2 mm, for example) (see Figs. 11 and 12). The center-to-center spacing distance P1, the center-to-center spacing distance P2, and the diameter D4 each include a tolerance (variation in dimension) (± 0.05 mm, for example).

The hook engaging portion 325a (325b) is arranged on the right side (arrow X2 direction side) (left side (arrow X1 direction side)) of the lower frame component member 32, as shown in Fig. 6. The hook engaging portion 325a (325b) is formed with a substantially rectangular through-hole extending vertically (in the direction Z). The hook engaging portions 325a and 325b deviate from each other in the vertical direction (direction Z).

The transverse frame component member 33 is provided on the left side (arrow X1 direction side) of the frame-shaped support frame 3, as shown in Fig. 4. In other words, the transverse frame component member 33 is arranged in a position opposed to the heat sink member 31. The transverse frame component member 33 is made of SECC (electrolytic zinc-plated steel). The transverse frame component member 33 is made of sheet metal having the thickness t2 equal to that of the lower frame component member 32. The transverse frame component member 33 is configured to support the display portion 2 (reflective sheet 244). The transverse frame component member 33 is formed to extend vertically (in the direction Z), as shown in Fig. 7. The transverse frame component member 33 has the length L3, which is smaller than the length L1, in the short-side direction (direction X). The transverse frame component member 33 has drawn portions 331a and 331b, screw receiving holes 332a and 332b, jig holes 333a and 333b, dowel holes 334a to 334f, and hooks 335a and 335b. The drawn portions 331a and 331b are examples of the "second drawn portion" in the present invention. The dowel holes 334a to 334c are examples of the "second recess portion" in the present invention, and the dowel holes 334d to 334f are examples of the "fourth recess portion" in the present invention. The hooks 335a and 335b are examples of the "third hook portion" and the "second hook portion" in the present invention, respectively.

The drawn portion 331a (331b) is arranged on the upper side (arrow Z1 direction side) (lower side (arrow Z2 direction side)) of the transverse frame component member 33, as shown in Fig. 7. The drawn portion 331a (331b) is formed to protrude toward the upper frame component member 34 (lower frame component member 32) (arrow Y2 direction side).

The screw receiving hole 332a (332b) is arranged in an upper left region (region in the arrow X1 direction and the arrow Z1 direction) (lower left region (region in the arrow X1 direction and the arrow Z2 direction)) of the drawn portion 331a (331b). The screw receiving hole 332a (332b) is arranged in a position spaced in the arrow X1 direction from the hook 335a (335b) and within the width W of the hook 335a (335b) in the direction Z.

The jig hole 333a (333b) is arranged in a substantially central portion of the drawn portion 331a (331b). Specifically, the jig hole 333a (333b) is arranged between the hook 335a (335b) and the screw receiving hole 332a (332b) in a direction (direction X) orthogonal to the longitudinal direction of the transverse frame component member 33. The jig hole 333a (333b) is provided to receive the unshown jig and position the transverse frame component member 33 when the support frame 3 is assembled. The jig hole 333a (333b) is formed by a circular through-hole having a diameter D1 (4.2 mm ± 0.05 mm, for example).

The dowel holes 334a to 334c (334d to 334f) are arranged at prescribed intervals around the jig hole 333a (333b) in the drawn portion 331a (331b). The dowel holes 334a to 334c (334d to 334f) are so arranged that the arrangement positions thereof form a triangle, as viewed from the anteroposterior direction (direction Y). Specifically, the dowel hole 334a is arranged at a center-to-center spacing distance (pitch) P1 (13 mm ± 0.05 mm, for example) on the right side (arrow X2 direction side) of the jig hole 333a. The dowel hole 334b is arranged at a center-to-center spacing distance (pitch) P2 (8 mm ± 0.05 mm, for example) on the upper side (arrow Z1 direction side) of the jig hole 333a. The dowel hole 334c is arranged at the same center-to-center spacing distance (pitch) P1 as the dowel hole 334a on the left side (arrow X1 direction side) of the jig hole 333a. The dowel holes 334a to 334c each are formed by a circular through-hole having a diameter D1 equal to that of the jig hole 333a. The diameter D1, the center-to-center spacing distance P1, and the center-to-center spacing distance P2 each include a tolerance (variation in dimension) (± 0.05 mm, for example).

The dowel hole 334d is arranged at a center-to-center spacing distance P1 (13 mm ± 0.05 mm, for example) on the right side (arrow X2 direction side) of the jig hole 333b. The dowel hole 334e is arranged at a center-to-center spacing distance P2 (8 mm ± 0.05 mm, for example) on the lower side (arrow Z2 direction side) of the jig hole 333b. The dowel hole 334f is arranged at the same center-to-center spacing distance P1 as the dowel hole 334d on the left side (arrow X1 direction side) of the jig hole 333b. The dowel holes 334d and 334f each have a width D2 (4.2 mm ± 0.05 mm, for example), which is equal to the diameter D1 of each of the dowel holes 334a to 334c, in the horizontal direction (direction X) and are formed by an oblong through-hole having a length D3 (6 mm ± 0.05 mm, for example), which is larger than the diameter D1 of each of the dowel holes 334a to 334c, in the vertical direction (direction Z). The dowel hole 334e has a width D2 (4.2 mm ± 0.05 mm, for example), which is equal to the diameter D1 of each of the dowel holes 334a to 334c, in the vertical direction (direction Z) and is formed by an oblong through-hole having a length D3 (6 mm ± 0.05 mm, for example), which is larger than the diameter D1 of each of the dowel holes 334a to 334c, in the horizontal direction (direction X). The center-to-center spacing distance P1, the center-to-center spacing distance P2, the width D2, and the length D3 each include a tolerance (variation in dimension) (± 0.05 mm, for example).

The hook 335a is arranged on the upper side (arrow Z1 direction side) of the transverse frame component member 33, as shown in Fig. 7. The hook 335a has a width W, which is equal to those of the hooks 315a and 315b, in the vertical direction (direction Z). The hook 335a has a level difference h2 in the anteroposterior direction (direction Y) and is formed to extend toward the heat sink member 31 (arrow X2 direction side). The hook 335b is arranged on the lower side (arrow Z2 direction side) of the transverse frame component member 33 at an interval L6, which is different from the interval L5, from the hook 335a. The hook 335b has a width W, which is equal to those of the hooks 315a, 315b, and 335a, in the vertical direction (direction 2). The widths of the hooks 315a, 315b, 335a, and 335b may not be equal to each other. The hook 335b has a level difference h2 (see Fig. 13), which is equal to that of the hook 335a, in the anteroposterior direction (direction Y) and is formed to extend toward the heat sink member 31 (arrow X2 direction side).

The upper frame component member 34 is provided on the upper side (arrow Z1 direction side) of the frame-shaped support frame 3, as shown in Fig. 4. In other words, the upper frame component member 34 is arranged in a position opposed to the lower frame component member 32. The upper frame component member 34 is made of SECC (electrolytic zinc-plated steel). The upper frame component member 34 is made of sheet metal having the thickness t2 equal to those of the lower frame component member 32 and the transverse frame component member 33. The upper frame component member 34 is configured to support the display portion 2 (reflective sheet 244). The upper frame component member 34 is formed to extend horizontally (in the direction X), as shown in Fig. 8. The upper frame component member 34 has the length L4, which is smaller than the length L1, in the short-side direction (direction Z). The upper frame component member 34 has drawn portions 341a and 341b, screw holes 342a and 342b, jig holes 343a and 343b, dowels 344a to 344f, and hook engaging portions 345a and 345b. The drawn portions 341a and 341b are examples of the "second drawn portion" in the present invention. The dowels 344a to 344c are examples of the "second projecting portion" in the present invention, and the dowels 344d to 344f are examples of the "third projecting portion" in the present invention. The hook engaging portions 345a and 345b are examples of the "third hook engaging portion" and the "fourth hook engaging portion" in the present invention, respectively.

The drawn portion 341a (341b) is arranged on the left side (arrow X1 direction side) (right side (arrow X2 direction side)) of the upper frame component member 34, as shown in Fig. 8. The drawn portion 341a (341b) is formed to protrude toward the transverse frame component member 33 (heat sink member 31) (arrow Y1 direction side).

The screw hole 342a (342b) is arranged in an upper left region (region in the arrow X1 direction and the arrow Z1 direction) (upper right region (region in the arrow X2 direction and the arrow Z1 direction)) of the drawn portion 341a (341b). The screw hole 342a (342b) is arranged in a position spaced in the arrow X1 direction (arrow X2 direction) from the hook engaging portions 345a (345b), as shown in Fig. 8.

The jig hole 343a (343b) is arranged in the drawn portion 341a (341b). Specifically, the jig hole 343a (343b) is arranged between the hook engaging portion 345a (345b) and the screw hole 342a (342b) in the longitudinal direction (direction X) of the upper frame component member 34. The jig hole 343a (343b) is provided to receive the unshown jig and position the upper frame component member 34 when the support frame 3 is assembled. The jig hole 343a (343b) is formed by a circular through-hole having a diameter D1 (4.2 mm ± 0.05 mm, for example) equal to those of the jig holes 313a and 313b.

The dowels 344a to 344c (344d to 344f) are arranged at prescribed intervals around the jig hole 343a (343b) in the drawn portion 341a (341b). The dowels 344a to 344c (344d to 344f) are so arranged that the arrangement positions thereof form a triangle, as viewed from the anteroposterior direction (direction Y). Specifically, the dowel 344a (344d) is arranged at a center-to-center spacing distance (pitch) P1 (13 mm ± 0.05 mm, for example) on the right side (arrow X2 direction side) (left side (arrow X1 direction side)) of the jig hole 343a (343b). The dowel 344b (344e) is arranged at a center-to-center spacing distance (pitch) P2 (8 mm ± 0.05 mm, for example) on the upper side (arrow Z1 direction side) of the jig hole 343a. The dowel 344c (344f) is arranged at the same center-to-center spacing distance (pitch) P1 as the dowel 344a (344d) on the left side (arrow X1 direction side) (right side (arrow X2 direction side)) of the jig hole 343a (343b). The dowels 344a to 344f each have a diameter D4 (4 mm ± 0.05 mm, for example) and are formed by a cylindrical protrusion protruding toward the transverse frame component member 33 (heat sink member 31) (arrow Y1 direction side) with a height h3 (2 mm, for example). The center-to-center spacing distance P1, the center-to-center spacing distance P2, and the diameter D4 each include a tolerance (variation in dimension) (± 0.05 mm, for example).

The hook engaging portion 345a (345b) is arranged on the left side (arrow X1 direction side) (right side (arrow X2 direction side)) of the upper frame component member 34, as shown in Fig. 8. The hook engaging portion 345a (345b) is formed with a substantially rectangular through-hole extending vertically (in the direction 2). The hook engaging portions 345a and 345b deviate from each other in the vertical direction (direction Z).

The heat sink member 31 is fixed to the lower frame component member 32 from the front side (arrow Y1 direction side), as shown in Fig. 3. The heat sink member 31 is screwed by inserting a screw 3a into the screw hole 322a of the lower frame component member 32 through the screw receiving hole 312a from the front side (arrow Y1 direction side) in a state where the dowels 324a to 324c of the lower frame component member 32 are fitted to the dowel holes 314a to 314c, respectively, as shown in Figs. 4 and 10 to 12. The dowels 324a to 324c are fitted to the dowel holes 314a to 314c with clearances, respectively. Only the drawn portion 311a of the heat sink member 31 and the drawn portion 321a of the lower frame component member 32 come into contact with each other. The screw 3a is an example of the "fastening member" or the "first fastening member" in the present invention.

Furthermore, the heat sink member 31 is screwed by inserting the screw 3a into the screw hole 322a of the lower frame component member 32 through the screw receiving hole 312a from the front side (arrow Y1 direction side) in a state where the hook 315a engages with the hook engaging portion 325a of the lower frame component member 32, as shown in Figs. 4, 9, and 11. Specifically, the hook 315a of the heat sink member 31 is inserted into the through-hole of the hook engaging portion 325a of the lower frame component member 32 from the front side (arrow Y1 direction side) toward the rear side (arrow Y2 direction side). The front side (arrow Y1 direction side) of the hook 315a and the rear side (arrow Y2 direction side) of the hook engaging portion 325a come into contact with each other, whereby uplift of the heat sink member 31 toward the front side (arrow Y1 direction side) with respect to the lower frame component member 32 is regulated. In other words, the hook 315a of the heat sink member 31 and the hook engaging portion 325a of the lower frame component member 32 engage with each other in the insertion direction (direction Y) of the screw 3a.

The transverse frame component member 33 is fixed to the upper frame component member 34 from the front side (arrow Y1 direction side), as shown in Fig. 3. The transverse frame component member 33 is screwed by inserting a screw 3b into the screw hole 342a of the upper frame component member 34 through the screw receiving hole 332a from the front side (arrow Y1 direction side) in a state where the dowels 344a to 344c of the upper frame component member 34 are fitted to the dowel holes 334a to 334c, respectively, as shown in Fig. 4. The dowels 344a to 344c are fitted to the dowel holes 344a to 344c with clearances, respectively. Only the drawn portion 331a of the transverse frame component member 33 and the drawn portion 341a of the upper frame component member 34 come into contact with each other. The screw 3b is an example of the "fastening member" or the "second fastening member" in the present invention.

Furthermore, the transverse frame component member 33 is screwed by inserting the screw 3b into the screw hole 342a of the upper frame component member 34 through the screw receiving hole 332a from the front side (arrow Y1 direction side) in a state where the hook 335a engages with the hook engaging portion 345a of the upper frame component member 34, as shown in Fig. 4. Specifically, the hook 335a of the transverse frame component member 33 is inserted into the through-hole of the hook engaging portion 345a of the upper frame component member 34 from the front side (arrow Y1 direction side) toward the rear side (arrow Y2 direction side). The front side (arrow Y1 direction side) of the hook 335a and the rear side (arrow Y2 direction side) of the hook engaging portion 345a come into contact with each other, whereby uplift of the transverse frame component member 33 toward the front side (arrow Y1 direction side) with respect to the upper frame component member 34 is regulated. In other words, the hook 335a of the transverse frame component member 33 and the hook engaging portion 345a of the upper frame component member 34 engage with each other in the insertion direction (direction Y) of the screw 3b.

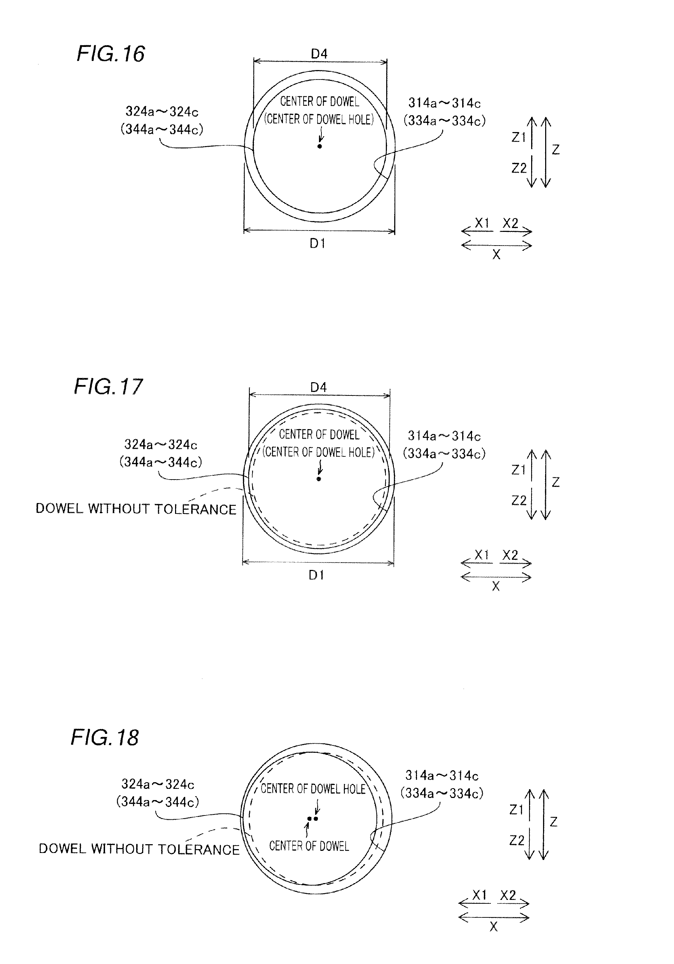

Fitting the dowels 324a to 324c of the lower frame component member 32 to the dowel holes 314a to 314c of the heat sink member 31 and fitting the dowels 344a to 344c of the upper frame component member 34 to the dowel holes 334a to 334c of the transverse frame component member 33 are now described with reference to Figs. 16 to 18. The diameters D1 of the dowel holes 314a to 314c (334a to 334c) are larger than the diameters D4 of the dowels 324a to 324c (344a to 344c). Thus, the dowels 324a to 324c (344a to 344c) are fitted to the dowel holes 314a to 314c (334a to 334c) with the clearances in the directions X and Z, as shown in Fig. 16. If the diameters D4 of the dowels 324a to 324c (344a to 344c) are increased due to the tolerance (variation in dimension), the clearances between the dowel holes 314a to 314c (334a to 334c) and the dowels 324a to 324c (344a to 344c) in the directions X and Z are reduced or the clearances therebetween disappear locally, as shown in Fig. 17. Thus, movement of the heat sink member 31 (transverse frame component member 33) in the directions X and Z with respect to the lower frame component member 32 (upper frame component member 34) is regulated. The dowels 324a to 324c (344a to 344c) and the dowel holes 314a to 314c (334a to 334c) are so configured that the dowels 324a to 324c (344a to 344c) are fitted to the dowel holes 314a to 314c (334a to 334c) even if the diameters D4 of the dowels 324a to 324c (344a to 344c) are maximized (4.05 mm, for example) due to the tolerance (variation in dimension) and the diameters D1 of the dowel holes 314a to 314c (334a to 334c) are minimized (4.15 mm, for example) due to the tolerance (variation in dimension).

If the centers of the dowels 324a to 324c (344a to 344c) deviate in the arrow X1 direction from the centers of the dowel holes 314a to 314c (334a to 334c) due to the tolerance (variation in dimension), the clearances between the dowel holes 314a to 314c (334a to 334c) and the dowels 324a to 324c (344a to 344c) in the arrow X1 direction are reduced or the clearances therebetween disappear locally, as shown in Fig. 18. Thus, movement of the heat sink member 31 (transverse frame component member 33) in the arrow X2 direction with respect to the lower frame component member 32 (upper frame component member 34) is regulated. Even if the centers of the dowels 324a to 324c (344a to 344c) deviate in a direction other than the arrow X1 direction from the centers of the dowel holes 314a to 314c (334a to 334c) due to the tolerance (variation in dimension), movement of the heat sink member 31 (transverse frame component member 33) with respect to the lower frame component member 32 (upper frame component member 34) is regulated similarly. The dowels 324a to 324c are fitted to the dowel holes 314a to 314c in a state where the center of the dowel deviates from the center of the dowel hole as viewed from a fitting direction (direction Y) in at least one set of the dowels 324a to 324c and the dowel holes 314a to 314c. The dowels 324a to 324c (344a to 344c) and the dowel holes 314a to 314c (334a to 334c) are so configured that the dowels 324a to 324c (344a to 344c) are fitted to the dowel holes 314a to 314c (334a to 334c) even if the centers of the dowels 324a to 324c (344a to 344c) deviate from the centers of the dowel holes 314a to 314c (334a to 334c) by 0.1 mm, for example, due to the tolerance (variation in dimension).

The heat sink member 31 is fixed to the upper frame component member 34 from the front side (arrow Y1 direction side), as shown in Fig. 3. The heat sink member 31 is screwed by inserting a screw 3c into the screw hole 342b of the upper frame component member 34 through the screw receiving hole 312b from the front side (arrow Y1 direction side) in a state where the dowels 344d to 344f of the upper frame component member 34 are fitted to the dowel holes 314d to 314f, respectively, as shown in Fig. 4. The dowels 344d to 344f are fitted to the dowel holes 314d to 314f with clearances, respectively. Only the drawn portion 311b of the heat sink member 31 and the drawn portion 341b of the upper frame component member 34 come into contact with each other. The screw 3c is an example of the "fastening member" or the "third fastening member" in the present invention.

Furthermore, the heat sink member 31 is screwed by inserting the screw 3c into the screw hole 342b of the upper frame component member 34 through the screw receiving hole 312b from the front side (arrow Y1 direction side) in a state where the hook 315b engages with the hook engaging portion 345b of the upper frame component member 34, as shown in Fig. 4. Specifically, the hook 315b of the heat sink member 31 is inserted into the through-hole of the hook engaging portion 345b of the upper frame component member 34 from the front side (arrow Y1 direction side) toward the rear side (arrow Y2 direction side). The front side (arrow Y1 direction side) of the hook 315b and the rear side (arrow Y2 direction side) of the hook engaging portion 345b come into contact with each other, whereby uplift of the heat sink member 31 toward the front side (arrow Y1 direction side) with respect to the upper frame component member 34 is regulated. In other words, the hook 315b of the heat sink member 31 and the hook engaging portion 345b of the upper frame component member 34 engage with each other in the insertion direction (direction Y) of the screw 3c.

The transverse frame component member 33 is fixed to the lower frame component member 32 from the front side (arrow Y1 direction side), as shown in Fig. 3. The transverse frame component member 33 is screwed by inserting a screw 3d into the screw hole 322b of the lower frame component member 32 through the screw receiving hole 332b from the front side (arrow Y1 direction side) in a state where the dowels 324d to 324f of the lower frame component member 32 are fitted to the dowel holes 334d to 334f, respectively, as shown in Fig. 4. The dowels 324d to 324f are fitted to the dowel holes 334d to 334f with clearances, respectively. Only the drawn portion 331b of the transverse frame component member 33 and the drawn portion 321b of the lower frame component member 32 come into contact with each other. The screw 3d is an example of the "fastening member" or the "fourth fastening member" in the present invention.

Furthermore, the transverse frame component member 33 is screwed by inserting the screw 3d into the screw hole 322b of the lower frame component member 32 through the screw receiving hole 332b from the front side (arrow Y1 direction side) in a state where the hook 335b engages with the hook engaging portion 325b of the lower frame component member 32, as shown in Fig. 4. Specifically, the hook 335b of the transverse frame component member 33 is inserted into the through-hole of the hook engaging portion 325b of the lower frame component member 32 from the front side (arrow Y1 direction side) toward the rear side (arrow Y2 direction side). The front side (arrow Y1 direction side) of the hook 335b and the rear side (arrow Y2 direction side) of the hook engaging portion 325b come into contact with each other, whereby uplift of the transverse frame component member 33 toward the front side (arrow Y1 direction side) with respect to the lower frame component member 32 is regulated. In other words, the hook 335b of the transverse frame component member 33 and the hook engaging portion 325b of the lower frame component member 32 engage with each other in the insertion direction (direction Y) of the screw 3d.

The rear frame 4 is arranged on the rear side (arrow Y2 direction side) of the support frame 3, as shown in Fig. 3. The rear frame 4 has a substantially rectangular shape in front elevational view. The rear frame 4 is made of SECC (electrolytic zinc-plated steel). A central portion of the rear surface (surface on the arrow Y2 direction side) of the rear frame 4 is covered with the cover member 6, and the outer periphery and the vicinity of the outer periphery thereof are exposed. The rear frame 4 includes screw receiving holes 4a and 4b. The support frame 3 is fixed to the rear frame 4 by fastening screws 4c inserted into the screw holes 318 of the heat sink member 31 through the screw receiving holes 4a. The drawn portion 317 of the heat sink member 31 is brought into surface contact with the front surface (surface on the arrow Y1 direction side) of the portion exposed from the cover member of the rear surface (surface on the arrow Y2 direction side) of the rear frame 4. The rear frame 4 is fixed to the front cabinet 1 with screws 4d inserted into the screw receiving holes 4b.

The circuit board 5 is fixed to the rear side (arrow Y2 direction side) of the rear frame 4, as shown in Fig. 2. The circuit board 5 is mounted with a tuner 51 and terminals 52 to input/output pictures, sound, and data. The tuner 51 is configured to be capable of receiving television broadcasting.

The cover member 6 is fixed to the rear side (arrow Y2 direction side) of the rear frame 4, as shown in Fig. 2. The cover member 6 is formed to cover the circuit board 5 mounted on the rear frame 4 from the rear side (arrow Y2 direction side). Furthermore, the cover member 6 is formed to cover the central portion on the rear side (arrow Y2 direction side) of the rear frame 4 and expose the outer periphery and the vicinity of the outer periphery on the rear side (arrow Y2 direction side) of the rear frame 4.

The stand 7 is arranged on the lower side (arrow Z2 direction side) of the television set 100 and configured to support the television set 100. The power cord 8 is configured to be capable of supplying power from an external portion to the television set 100.

A procedure for assembling the support frame 3 according to the aforementioned embodiment is now described. First, the lower frame component member 32 is so placed that projecting portions of the unshown jig are fitted to the jig holes 323a and 323b of the lower frame component member 32. Next, the upper frame component member 34 is so placed that projecting portions of the unshown jig are fitted to the jig holes 343a and 343b of the upper frame component member 34.

Then, the hooks 315a and 315b of the heat sink member 31 are inserted into the hook engaging portion 325a of the lower frame component member 32 and the hook engaging portion 345b of the upper frame component member 34, respectively. The heat sink member 31 is placed to overlap with the front sides (arrow Y1 direction sides) of the lower frame component member 32 and the upper frame component member 34 so that projecting portions of the unshown jig are fitted to the jig holes 313a and 313b of the heat sink member 31. Thus, the drawn portions 311a and 311b of the heat sink member 31 come into contact with the drawn portion 321a of the lower frame component member 32 and the drawn portion 341b of the upper frame component member 34, respectively. The jig hole 313a of the heat sink member 31 and the jig hole 323a of the lower frame component member 32 are arranged to overlap with each other as viewed from the anteroposterior direction (direction Y). In addition, the jig hole 313b of the heat sink member 31 and the jig hole 343b of the upper frame component member 34 are arranged to overlap with each other as viewed from the anteroposterior direction (direction Y). At this time, the dowels 324a to 324c of the lower frame component member 32 are inserted into the dowel holes 314a to 314c of the heat sink member 31, respectively, and the dowels 344d to 344f of the upper frame component member 34 are inserted into the dowel holes 314d to 314f of the heat sink member 31, respectively. Furthermore, the hook 315a engages with the hook engaging portion 325a, and the hook 315b engages with the hook engaging portion 345b.

Thereafter, the hooks 335a and 335b of the transverse frame component member 33 are inserted into the hook engaging portion 345a of the upper frame component member 34 and the hook engaging portion 325b of the lower frame component member 32, respectively. The transverse frame component member 33 is placed to overlap with the front sides (arrow Y1 direction sides) of the lower frame component member 32 and the upper frame component member 34 so that projecting portions of the unshown jig are fitted to the jig holes 333a and 333b of the transverse frame component member 33. Thus, the drawn portions 331a and 331b of the transverse frame component member 33 come into contact with the drawn portion 341a of the upper frame component member 34 and the drawn portion 321b of the lower frame component member 32, respectively. The jig hole 333a of the transverse frame component member 33 and the jig hole 343a of the upper frame component member 34 are arranged to overlap with each other as viewed from the anteroposterior direction (direction Y). In addition, the jig hole 333b of the transverse frame component member 33 and the jig hole 323b of the lower frame component member 32 are arranged to overlap with each other as viewed from the anteroposterior direction (direction Y). At this time, the dowels 344a to 344c of the upper frame component member 34 are inserted into the dowel holes 334a to 334c of the transverse frame component member 33, respectively, and the dowels 324d to 324f of the lower frame component member 32 are inserted into the dowel holes 334d to 334f of the transverse frame component member 33, respectively. Furthermore, the hook 335a engages with the hook engaging portion 345a, and the hook 335b engages with the hook engaging portion 325b.

Then, the heat sink member 31 and the lower frame component member 32 are fixed to each other. Specifically, the screw 3a is inserted into the screw receiving hole 312a of the heat sink member 31 and the screw hole 322a of the lower frame component member 32 and fastened. Thus, the heat sink member 31 and the lower frame component member 32 are fixed to each other with the screw 3a in contact with each other at the drawn portion 311a and the drawn portion 321a. Furthermore, the heat sink member 31 and the lower frame component member 32 are fixed to each other by fastening with the screw 3a in the state where the hook 315a engages with the hook engaging portion 325a. In addition, the heat sink member 31 and the lower frame component member 32 are fixed to each other by fastening with the screw 3a in the state where the dowels 324a to 324c are fitted to the dowel holes 314a to 314c with the clearances.

Then, the transverse frame component member 33 and the upper frame component member 34 are fixed to each other. Specifically, the screw 3b is inserted into the screw receiving hole 332a of the transverse frame component member 33 and the screw hole 342a of the upper frame component member 34 and fastened. Thus, the transverse frame component member 33 and the upper frame component member 34 are fixed to each other with the screw 3b in contact with each other at the drawn portion 331a and the drawn portion 341a. Furthermore, the transverse frame component member 33 and the upper frame component member 34 are fixed to each other by fastening with the screw 3b in the state where the hook 335a engages with the hook engaging portion 345a. In addition, the transverse frame component member 33 and the upper frame component member 34 are fixed to each other by fastening with the screw 3b in the state where the dowels 344a to 344c are fitted to the dowel holes 334a to 334c with the clearances.

Thereafter, the transverse frame component member 33 and the lower frame component member 32 are fixed to each other. Specifically, the screw 3d is inserted into the screw receiving hole 332b of the transverse frame component member 33 and the screw hole 322b of the lower frame component member 32 and fastened. Thus, the transverse frame component member 33 and the lower frame component member 32 are fixed to each other with the screw 3d in contact with each other at the drawn portion 331b and the drawn portion 321b. Furthermore, the transverse frame component member 33 and the lower frame component member 32 are fixed to each other by fastening with the screw 3d in the state where the hook 335b engages with the hook engaging portion 325b. In addition, the transverse frame component member 33 and the lower frame component member 32 are fixed to each other by fastening with the screw 3d in the state where the dowels 324d to 324f are fitted to the dowel holes 334d to 334f with the clearances.

Then, the heat sink member 31 and the upper frame component member 34 are fixed to each other. Specifically, the screw 3c is inserted into the screw receiving hole 312b of the heat sink member 31 and the screw hole 342b of the upper frame component member 34 and fastened. Thus, the heat sink member 31 and the upper frame component member 34 are fixed to each other with the screw 3c in contact with each other at the drawn portion 311b and the drawn portion 341b. Furthermore, the heat sink member 31 and the upper frame component member 34 are fixed to each other by fastening with the screw 3c in the state where the hook 315b engages with the hook engaging portion 345b. In addition, the heat sink member 31 and the upper frame component member 34 are fixed to each other by fastening with the screw 3c in the state where the dowels 344d to 344f are fitted to the dowel holes 314d to 314f with the clearances. In this manner, the heat sink member 31, the lower frame component member 32, the transverse frame component member 33, and the upper frame component member 34 are assembled with each other to form the frame-shaped support frame 3.

According to this embodiment, as hereinabove described, the support frame 3 supporting the reflective sheet 244 from the rear surface side (arrow Y2 direction side) is formed in the frame shape, whereby the surface area of the support frame 3 can be reduced, dissimilarly to a case where the support frame 3 covers the entire rear surface side (arrow Y2 direction side) of the reflective sheet 244, and hence the weight of the support frame 3 supporting the reflective sheet 244 from the rear surface side (arrow Y2 direction side) can be reduced. Thus, the weight of the television set 100 can be reduced, as compared with the case where the support frame 3 covers the entire rear surface side (arrow Y2 direction side) of the reflective sheet 244. Furthermore, the frame-shaped support frame 3 is constituted by the heat sink member 31, the lower frame component member 32, the transverse frame component member 33, and the upper frame component member 34, whereby material loss resulting from cutout can be reduced, as compared with a case where the frame-shaped support frame 3 is integrally formed by cutting out an internal portion of a single metal plate. Such effects are particularly effective in the large-sized television set 100.

According to this embodiment, the heat sink member 31 is made of a material more excellent in thermal conductivity than the lower frame component member 32, the transverse frame component member 33, and the upper frame component member 34, whereby the heat generated from the LED light source unit 245 can be effectively released by the heat sink member 31 made of the material excellent in thermal conductivity.

According to this embodiment, the metal rear frame 4 covering the rear surface side (arrow Y2 direction side) of the display portion 2 is provided, the drawn portion 317 is provided in the heat sink member 31, and the drawn portion 317 of the heat sink member 31 is brought into surface contact with the metal rear frame 4, whereby the heat generated from the LED light source unit 245 can be more effectively released from the heat sink member 31 to the external portion through the metal rear frame 4.

According to this embodiment, the heat sink member 31 is brought into contact with the front surface (surface on the arrow Y1 direction side) of the portion exposed from the cover member 6 of the rear surface (surface on the arrow Y2 direction side) of the rear frame 4, whereby the heat generated from the LED light source unit 245 can be efficiently released from the heat sink member 31 to the external portion through the portion of the rear frame 4 exposed from the cover member 6.

According to this embodiment, the heat sink member 31 is made of the metal plate material having the thickness larger than the thicknesses of the lower frame component member 32, the transverse frame component member 33, and the upper frame component member 34, whereby the heat capacity of the heat sink member 31 can be increased, and hence the heat generated from the LED light source unit 245 can be effectively released. Furthermore, the lower frame component member 32, the transverse frame component member 33, and the upper frame component member 34 have the thicknesses smaller than the thickness of the heat sink member 31, and hence the weight of the support frame 3 can be further reduced.

According to this embodiment, the heat sink member 31 is formed to have the short-side length larger than the short-side lengths of the lower frame component member 32, the transverse frame component member 33, and the upper frame component member 34, whereby the heat capacity of the heat sink member 31 can be easily increased. In addition, the surface area of the heat sink member 31 can be increased. Thus, the heat generated from the LED light source unit 245 can be more effectively released.

According to this embodiment, the heat sink member 31 and the lower frame component member 32 are fixed to each other with the screw 3a in contact with each other at the drawn portion 311a and the drawn portion 321a, the transverse frame component member 33 and the upper frame component member 34 are fixed to each other with the screw 3b in contact with each other at the drawn portion 331a and the drawn portion 341a, the transverse frame component member 33 and the lower frame component member 32 are fixed to each other with the screw 3d in contact with each other at the drawn portion 331b and the drawn portion 321b, and the heat sink member 31 and the upper frame component member 34 are fixed to each other with the screw 3c in contact with each other at the drawn portion 311b and the drawn portion 341b, whereby the contact area between the two frame component members fixed to each other can be reduced, and hence vibration resulting from sound output from a speaker of the television set 100 can be suppressed.

According to this embodiment, the heat sink member 31 and the lower frame component member 32 are fixed to each other by fastening with the screw 3a in the state where the hook 315a engages with the hook engaging portion 325a, whereby uplift and inclination (rotation along arrow A (see Fig. 12)) of the heat sink member 31 with respect to the lower frame component member 32 in a position other than the screw receiving hole 312a resulting from the fastening force of the screw 3a is suppressed by the engagement between the hook 315a and the hook engaging portion 325a. Furthermore, the heat sink member 31 and the upper frame component member 34 are fixed to each other by fastening with the screw 3c in the state where the hook 315b engages with the hook engaging portion 345b, whereby uplift and inclination (rotation along arrow A (see Fig. 12)) of the heat sink member 31 with respect to the upper frame component member 34 in a position other than the screw receiving hole 312b resulting from the fastening force of the screw 3c is suppressed by the engagement between the hook 315b and the hook engaging portion 345b. In addition, the transverse frame component member 33 and the lower frame component member 32 are fixed to each other by fastening with the screw 3d in the state where the hook 335b engages with the hook engaging portion 325b, whereby uplift and inclination (rotation along arrow B (see Fig. 13)) of the transverse frame component member 33 with respect to the lower frame component member 32 in a position other than the screw receiving hole 332b resulting from the fastening force of the screw 3d is suppressed by the engagement between the hook 335b and the hook engaging portion 325b. Moreover, the transverse frame component member 33 and the upper frame component member 34 are fixed to each other by fastening with the screw 3b in the state where the hook 335a engages with the hook engaging portion 345a, whereby uplift and inclination (rotation along arrow B (see Fig. 13)) of the transverse frame component member 33 with respect to the upper frame component member 34 in a position other than the screw receiving hole 332a resulting from the fastening force of the screw 3b is suppressed by the engagement between the hook 335a and the hook engaging portion 345a. Thus, the reflective sheet 244 can be inhibited from being excessively compressed by the frame-shaped support frame 3. Consequently, the light guide plate 243 arranged on the front surface side (arrow Y1 direction side) of the reflective sheet 244 can be inhibited from being locally compressed, and hence occurrence of luminance unevenness can be suppressed.

According to this embodiment, the heat sink member 31 and the lower frame component member 32 are fixed to each other by fastening with the screw 3a in the screw receiving hole 312a and the screw hole 322a which are spaced in the direction (direction X) orthogonal to the longitudinal direction of the heat sink member 31 from the engagement portion between the hook 315a and the hook engaging portion 325a, whereby engagement force resulting from the engagement between the hook 315a and the hook engaging portion 325a which are spaced in the direction (direction X) orthogonal to the longitudinal direction of the heat sink member 31 from the screw receiving hole 312a and the screw hole 322a can offset force in a direction of uplift and inclination (rotation along arrow A (see Fig. 12)) of the heat sink member 31 with respect to the lower frame component member 32 in a position other than the screw receiving hole 312a resulting from the fastening force of the screw 3a. Thus, uplift and inclination (rotation along arrow A (see Fig. 12)) of the heat sink member 31 with respect to the lower frame component member 32 can be easily suppressed.

According to this embodiment, the hook 315a and the hook engaging portion 325a are formed to engage with each other in a direction in which the heat sink member 31 and the lower frame component member 32 are screwed with the screw 3a in the screw receiving hole 312a and the screw hole 322a, whereby the hook 315a and the hook engaging portion 325a can engage with each other in a direction opposite to a direction of uplift of the heat sink member 31 with respect to the lower frame component member 32 resulting from screwing with the screw 3a, and hence uplift and inclination (rotation along arrow A (see Fig. 12)) of the heat sink member 31 with respect to the lower frame component member 32 can be more easily suppressed.

According to this embodiment, the hook 315a is formed with the width W to extend in the longitudinal direction (direction Z) of the heat sink member 31, and the screw receiving hole 312a and the screw hole 322a are arranged in the position spaced in the short-side direction (direction X) of the heat sink member 31 from the hook 315a and within the width W of the hook 315a, whereby a position spaced in the short-side direction (direction X) of the heat sink member 31 from the screw receiving hole 312a and the screw hole 322a where the heat sink member 31 is likely to be uplifted with respect to the lower frame component member 32 can be directly held by engagement of the hook 315a, and hence twisting and uplift of the heat sink member 31 with respect to the lower frame component member 32 can be suppressed. Thus, uplift and inclination (rotation along arrow A (see Fig. 12)) of the heat sink member 31 with respect to the lower frame component member 32 can be easily suppressed. Furthermore, the hook 315a is formed to extend in the longitudinal direction (direction Z) of the heat sink member 31, whereby the width W of the engagement portion of the hook 315a in the longitudinal direction (direction Z) of the heat sink member 31 can be increased, and hence force of uplift of the heat sink member 31 with respect to the lower frame component member 32 can be stably offset.

According to this embodiment, the hooks 315a and 315b are provided in the heat sink member 31, the hooks 335a and 335b are provided in the transverse frame component member 33, the hook engaging portions 325a and 325b are provided in the lower frame component member 32, and the hook engaging portions 345a and 345b are provided in the upper frame component member 34, whereby the mechanisms of two hook engagement portions in one frame component member can be rendered similar, and hence the frame-shaped support frame 3 can be easily assembled.

According to this embodiment, the heat sink member 31 and the lower frame component member 32 are fixed to each other by fastening with the screw 3a in the screw receiving hole 312a and the screw hole 322a in the state where the dowels 324a to 324c are fitted to the dowel holes 314a to 314c, whereby the clearance (fitting clearance) between the dowel hole and the dowel is reduced or disappears locally due to positional deviation or the like resulting from the tolerances (variations in dimension) of the sizes and pitches of the dowel hole and the dowel in a fitted portion of at least one set of the dowel holes 314a to 314c and the dowels 324a to 324c which are fitted to each other, and hence deviation and movement of the heat sink member 31 with respect to the lower frame component member 32 can be suppressed. Thus, the frame-shaped support frame 3 can be inhibited from becoming parallelogram-shaped or the like due to rotation (inclination) of the heat sink member 31 about the screw 3a with respect to the lower frame component member 32, and hence the frame-shaped support frame 3 can stably support the display portion 2.

According to this embodiment, the dowels 324a to 324c and the dowel holes 314a to 314c are configured to be fitted to each other in the state where the center of the dowel deviates from the center of the dowel hole as viewed from the fitting direction in at least one set of the dowels 324a to 324c and the dowel holes 314a to 314c which are fitted to each other, whereby at least one of the clearances between the dowel holes 314a to 314c and the dowels 324a to 324c is reduced, or at least one of the clearances therebetween is likely to disappear locally. Thus, rotation (inclination) of the heat sink member 31 with respect to the lower frame component member 32 can be easily suppressed.

According to this embodiment, the jig hole 313a to position the heat sink member 31 with respect to the lower frame component member 32 is provided in the heat sink member 31, the jig hole 323a to position the lower frame component member 32 with respect to the heat sink member 31 is provided in the lower frame component member 32, the dowel holes 314a to 314c are arranged at the prescribed interval around the jig hole 313a of the heat sink member 31, and the dowels 324a to 324c are arranged at the prescribed intervals around the jig hole 323a of the lower frame component member 32, whereby the dowels 324a to 324c can be easily fitted to the dowel holes 314a to 314c by positioning the heat sink member 31 and the lower frame component member 32 by the jig hole 313a and the jig hole 323a.

According to this embodiment, the three dowel holes 314a to 314c are so arranged that the arrangement positions thereof form a triangle, as viewed from the fitting direction (direction Y), and the three dowel 324a to 324c are so arranged that the arrangement positions thereof form a triangle corresponding to the triangle of the dowel holes 314a to 314c, whereby directions in which the tolerances (variations in dimension) of the pitches of the triangularly-arranged dowel holes 314a to 314c and dowels 324a to 324c occur can be dispersed, and hence rotation of the heat sink member 31 with respect to the lower frame component member 32 can be effectively suppressed.

According to this embodiment, the dowel holes 334a to 334c are provided in the transverse frame component member 33, the dowels 344a to 344c are provided in the upper frame component member 34, and the transverse frame component member 33 and the upper frame component member 34 are fixed to each other by fastening with the screw 3b in the state where the dowels 344a to 344c are fitted to the dowel holes 334a to 334c with the clearances, whereby the frame-shaped support frame 3 including the heat sink member 31, the lower frame component member 32, the transverse frame component member 33, and the upper frame component member 34 can be inhibited from becoming parallelogram-shaped or the like due to rotation (inclination) of the heat sink member 31 with respect to the lower frame component member 32 and rotation (inclination) of the transverse frame component member 33 with respect to the upper frame component member 34. Thus, the frame-shaped support frame 3 can more stably support the display portion 2.

According to this embodiment, the oblong hole-shaped dowel holes 314d to 314f each having a larger length in a prescribed direction relative to the dowel holes 314a to 314c are provided in the heat sink member 31, the dowels 344d to 344f are provided in the upper frame component member 34, the oblong hole-shaped dowel holes 334d to 334f each having a larger length in a prescribed directions relative to the dowel holes 334a to 334c are provided in the transverse frame component member 33, the dowels 324d to 324f are provided in the lower frame component member 32, the heat sink member 31 and the upper frame component member 34 are fixed to each other by fastening with the screw 3c in the state where the dowels 344d to 344f are fitted to the oblong hale-shaped dowel holes 314d to 314f with the clearances, and the transverse frame component member 33 and the lower frame component member 32 are fixed to each other by fastening with the screw 3d in the state where the dowels 324d to 324f are fitted to the oblong hole-shaped dowel holes 334d to 334f with the clearances, whereby the tolerances (variations in dimension) of the sizes and pitches of the dowel holes 314d to 314f and the dowels 344d to 344f can be tolerated by the oblong hole-shaped dowel holes 314d to 314f, and hence the dowels 344d to 344f can be reliably fitted to the dowel holes 314d to 314f. Furthermore, the tolerances (variations in dimension) of the sizes and pitches of the dowel holes 334d to 334f and the dowels 324d to 324f can be tolerated by the oblong hole-shaped dowel holes 334d to 334f, and hence the dowels 324d to 324f can be reliably fitted to the dowel holes 334d to 334f. Thus, the frame-shaped support frame 3 including the heat sink member 31, the lower frame component member 32, the transverse frame component member 33, and the upper frame component member 34 can be easily assembled.

The embodiment disclosed this time must be considered as illustrative in all points and not restrictive. The range of the present invention is shown not by the above description of the embodiment but by the scope of claims for patent, and all modifications within the meaning and range equivalent to the scope of claims for patent are included.

For example, while the television set is applied as the example of the display according to the present invention in the aforementioned embodiment, the present invention is not restricted to this. The present invention may alternatively be applied to a display other than the television set. For example, the present invention may be applied to a display of a PC (personal computer) or the like.

While the drawn portions (second drawn portion) are provided in all of the heat sink member (first frame component member), the lower frame component member (second frame component member), the transverse frame component member (third frame component member), and the upper frame component member (fourth frame component member) in the aforementioned embodiment, the present invention is not restricted to this. According to the present invention, the second drawn portion may alternatively be provided in at least one frame component member, and the frame component member provided with the second drawn portion and a frame component member fixed thereto may simply come into contact with each other and be fixed to each other in the second drawn portion.

While the heat sink member (first frame component member), the lower frame component member (second frame component member), the transverse frame component member (third frame component member), and the upper frame component member (fourth frame component member) are made of different materials in the aforementioned embodiment, the present invention is not restricted to this. According to the present invention, the first frame component member, the second frame component member, the third frame component member, and the fourth frame component member may alternatively be made of the same material.

While one of the four frame component members consists of a heat sink in the aforementioned embodiment, the present invention is not restricted to this. According to the present invention, more than one frame component member of the four frame component members may alternatively consist of a heat sink.

While one of the four frame component members consists of a heat sink in the aforementioned embodiment, the present invention is not restricted to this. According to the present invention, the frame-shaped support portion may alternatively be constituted by only frame component members consisting of no heat sink.

While the heat sink member (first frame component member), the lower frame component member (second frame component member), the transverse frame component member (third frame component member), and the upper frame component member (fourth frame component member) are made of metal in the aforementioned embodiment, the present invention is not restricted to this. According to the present invention, the first frame component member, the second frame component member, the third frame component member, and the fourth frame component member may alternatively be made of resin, such as polystyrene resin, ABS resin, or resin prepared by mixing polycarbonate and polystyrene with a filler, for example.

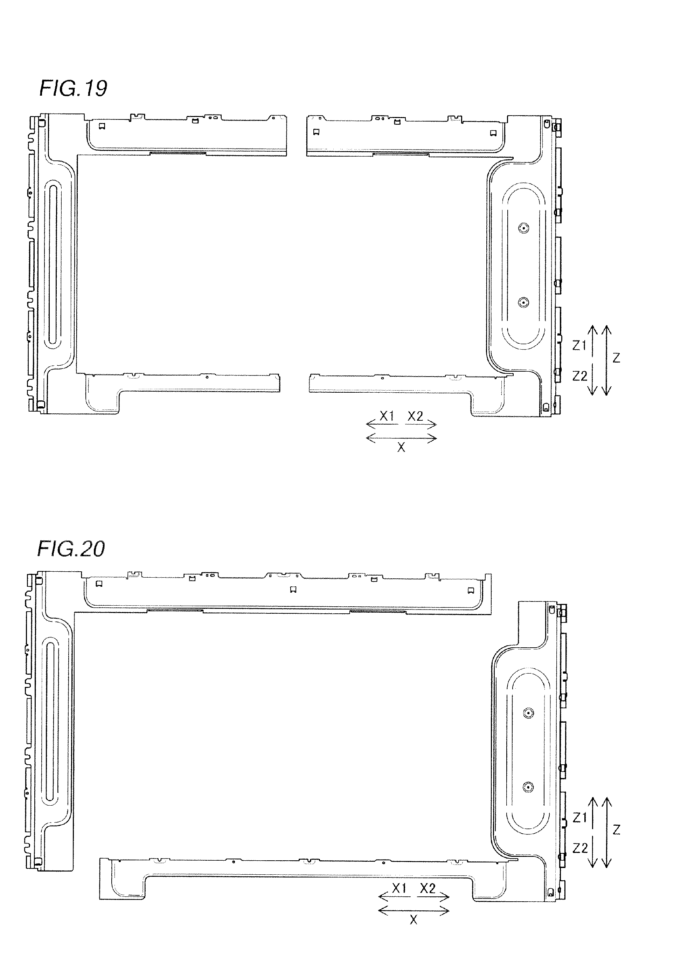

While the support frame serving as the support portion includes the heat sink member (first frame component member), the lower frame component member (second frame component member), the transverse frame component member (third frame component member), and the upper frame component member (fourth frame component member) in the aforementioned embodiment, the present invention is not restricted to this. According to the present invention, the support portion may not be constituted by the four members, so far as the same includes at least the first frame component member and the second frame component member. For example, the support portion may alternatively be constituted by two members of a substantially U-shaped member having three sides of a frame shape and a substantially linear member. Alternatively, the support portion may be constituted by two substantially U-shaped members, as shown in Fsg. 19, or the support portion may be constituted by two substantially L-shaped members, as shown in Fig. 20.

While the hooks (hook portion) or the hook engaging portions are provided in each of the heat sink member (first frame component member), the lower frame component member (second frame component member), the transverse frame component member (third frame component member), and the upper frame component member (fourth frame component member) in the aforementioned embodiment, the present invention is not restricted to this. According to the present invention, no hook portion or hook engaging portion may be provided in each of the third frame component member and the fourth frame component member, so far as the first hook portion is provided in at least either the first frame component member or the second frame component member while the first hook engaging portion is provided in at least either the second frame component member or the first frame component member.

While the hook 315a (first hook portion) and the hook 315b (fourth hook portion) are provided in the heat sink member (first frame component member), the hook 335a (third hook portion) and the hook 335b (second hook portion) are provided in the transverse frame component member (third frame component member), the hook engaging portion 325a (first hook engaging portion) and the hook engaging portion 325b (second hook engaging portion) are provided in the lower frame component member (second frame component member), and the hook engaging portion 345a (third hook engaging portion) and the hook engaging portion 345b (fourth hook engaging portion) are provided in the upper frame component member (fourth frame component member) in the aforementioned embodiment, the present invention is not restricted to this. According to the present invention, the first frame component member, the second frame component member, the third frame component member, and the fourth frame component member may alternatively include both the hook portion and the hook engaging portion, so far as the same can be assembled in a frame shape.

While the hook engaging portion is formed with the through-hole in the aforementioned embodiment, the present invention is not restricted to this. According to the present invention, the hook engaging portion may alternatively be formed by partially uprighting a metal plate or notching an end portion of a metal plate, for example.

While the dowel holes (recess portion) or the dowels (projecting portion) are provided in each of the heat sink member (first frame component member), the lower frame component member (second frame component member), the transverse frame component member (third frame component member), and the upper frame component member (fourth frame component member) in the aforementioned embodiment, the present invention is not restricted to this. According to the present invention, no recess portion or projecting portion may be provided in each of the third frame component member and the fourth frame component member, so far as the first recess portion is provided in at least the first frame component member while the first projecting portion is provided in at least the second frame component member.

While the dowel holes 314a to 314c (first recess portion) and the dowel holes 334a to 334c (second recess portion) each are formed by the circular through-hole in the aforementioned embodiment, the present invention is not restricted to this. According to the present invention, the first recess portion and the second recess portion may alternatively be formed in a shape other than a circular shape. For example, the first recess portion and the second recess portion may be formed in an elliptical shape, a square shape, or the like. Alternatively, the first recess portion and the second recess portion may not be formed by the through-hole. For example, the first recess portion and the second recess portion may be formed by a dent, a notch, or the like.

While the three dowel holes 314a to 314c (first recess portion) and the three dowels 324a to 324c (first projecting portion) are provided and so arranged that the arrangement positions thereof form a triangle, as viewed from the fitting direction in the aforementioned embodiment, the present invention is not restricted to this. According to the present invention, two or more than three first recess portions and two or more than three first projecting portions may alternatively be provided. If more than three first recess portions and more than three first projecting portions are provided, the first recess portions and the first projecting portions may be so arranged that the arrangement positions thereof form a polygon, as viewed from the fitting direction.

## Claims

1. A display comprising:
a display portion (2) including a light source (245) and a reflective sheet (244) reflecting light emitted from the light source toward a front surface side which is a display screen side; and
a frame-shaped support portion (3) supporting the reflective sheet of the display portion from a rear surface side opposite to the display screen side, wherein
the frame-shaped support portion includes a first frame component member (31) and a second frame component member (32), and
the first frame component member and the second frame component member are fixed to each other by fastening with a first fastening member (3a).

2. The display according to claim 1, wherein
the frame-shaped support portion further includes a third frame component member (33) and a fourth frame component member (34), and
the first frame component member is made of a material more excellent in thermal conductivity than the second frame component member, the third frame component member, and the fourth frame component member.

3. The display according to claim 2, further comprising a metal rear frame (4) arranged on a rear surface side of the frame-shaped support portion, covering the rear surface side of the display portion, wherein
the first frame component member has a first drawn portion (317) brought into contact with the metal rear frame.

4. The display according to claim 3, further comprising a cover member (6) arranged on a rear surface side of the metal rear frame, covering a rear surface of the rear frame to partially expose the rear surface of the rear frame, wherein
the first frame component member is brought into contact with a front surface of a portion exposed from the cover member of the rear surface of the rear frame.

5. The display according to claim 2, wherein
at least one of two frame component members fixed to each other in at least one of four fixed portions between the first frame component member, the second frame component member, the third frame component member, and the fourth frame component member which are fixed to each other is provided with a second drawn portion (311a, 311b, 321a, 321b, 331a, 331b, 341a, 341b), and
the frame component member provided with the second drawn portion and the other frame component member fixed to the frame component member provided with the second drawn portion come into contact with each other and are fixed to each other with a fastening member (3a, 3b, 3c, 3d) in the second drawn portion.

6. The display according to claim 1, wherein
either the first frame component member or the second frame component member is provided with a first hook portion (315a) while either the second frame component member or the first frame component member is provided with a first hook engaging portion (325a), and
the first frame component member and the second frame component member are fixed to each other by fastening with the first fastening member in a state where the first hook portion engages with the first hook engaging portion.

7. The display according to claim 6, wherein
the first frame component member and the second frame component member are fixed to each other by fastening with the first fastening member in a first fastening portion (312a, 322a) spaced in a direction orthogonal to a longitudinal direction of the first frame component member from an engagement portion between the first hook portion and the first hook engaging portion.

8. The display according to claim 7, wherein
the first fastening member includes a screw (3a),
the first fastening portion includes a screw fastening portion (312a, 322a), and
the first hook portion and the first hook engaging portion are formed to engage with each other in a direction in which the first frame component member and the second frame component member are screwed with the screw in the screw fastening portion.

9. The display according to claim 7, wherein
the first hook portion is formed with a prescribed width to extend in the longitudinal direction of the first frame component member, and
the first fastening portion is arranged in a position spaced in a short-side direction of the first frame component member from the first hook portion and between one end and the other end of the prescribed width of the first hook portion.

10. The display according to claim 6, wherein
the frame-shaped support portion further includes a third frame component member (33) and a fourth frame component member (34),
either the second frame component member or the third frame component member is provided with a second hook portion (335b) while either the third frame component member or the second frame component member is provided with a second hook engaging portion (325b),
either the third frame component member or the fourth frame component member is provided with a third hook portion (335a) while either the fourth frame component member or the third frame component member is provided with a third hook engaging portion (345a),
either the fourth frame component member or the first frame component member is provided with a fourth hook portion (315b) while either the first frame component member or the fourth frame component member is provided with a fourth hook engaging portion (345b),
the third frame component member and the fourth frame component member are fixed to each other by fastening with a second fastening member (3b) in a state where the third hook portion engages with the third hook engaging portion,
the fourth frame component member and the first frame component member are fixed to each other by fastening with a third fastening member (3c) in a state where the fourth hook portion engages with the fourth hook engaging portion, and
the second frame component member and the third frame component member are fixed to each other by fastening with a fourth fastening member (3d) in a state where the second hook portion engages with the second hook engaging portion.

11. The display according to claim 1, wherein
the first frame component member has a plurality of first recess portions (314a, 314b, 314c),
the second frame component member has a plurality of first projecting portions (324a, 324b, 324c) provided to correspond to the plurality of first recess portions, respectively, and
the first frame component member and the second frame component member are fixed to each other by fastening with the first fastening member in a fastening portion in a state where the plurality of first projecting portions are fitted to the plurality of first recess portions.

12. The display according to claim 11, wherein
the plurality of first projecting portions are fitted to the plurality of first recess portions in a state where a center of a first recess portion deviates from a center of a first projecting portion as viewed from a fitting direction in at least one set of the plurality of first recess portions and the plurality of first projecting portions which are fitted to each other.

13. The display according to claim 11, wherein
the first frame component member further has a first positioning portion (313a) to position the first frame component member with respect to the second frame component member,
the second frame component member further has a second positioning portion (323a) to position the second frame component member with respect to the first frame component member,
the plurality of first recess portions are arranged at prescribed intervals around the first positioning portion of the first frame component member, and
the plurality of first projecting portions are arranged at prescribed intervals around the second positioning portion of the second frame component member.

14. The display according to claim 11, wherein
the frame-shaped support portion further includes a third frame component member (33) and a fourth frame component member (34),
the third frame component member has a plurality of second recess portions (334a, 334b, 334c),
the fourth frame component member has a plurality of second projecting portions (344a, 344b, 344c) provided to correspond to the plurality of second recess portions, respectively, and
the third frame component member and the fourth frame component member are fixed to each other by fastening with a second fastening member (3b) in a state where the plurality of second projecting portions are fitted to the plurality of second recess portions with clearances.

15. The display according to claim 14, wherein
the first frame component member has a plurality of oblong hole-shaped third recess portions (314d, 314e, 314f) each having a larger length in a prescribed direction relative to the plurality of first recess portions,
the fourth frame component member has a plurality of third projecting portions (344d, 344e, 344f) provided to correspond to the plurality of third recess portions, respectively,
the third frame component member has a plurality of oblong hole-shaped fourth recess portions (334d, 334e, 334f) each having a larger length in a prescribed direction relative to the plurality of second recess portions,
the second frame component member has a plurality of fourth projecting portions (324d, 324e, 324f) provided to correspond to the plurality of fourth recess portions, respectively,
the first frame component member and the fourth frame component member are fixed to each other by fastening with a third fastening member (3c) in a state where the plurality of third projecting portions are fitted to the plurality of oblong hole-shaped third recess portions with clearances, and
the third frame component member and the second frame component member are fixed to each other by fastening with a fourth fastening member (3d) in a state where the plurality of fourth projecting portions are fitted to the plurality of oblong hole-shaped fourth recess portions with clearances.
